# EUROPEAN PATENT APPLICATION

(11) **EP 2 420 771 A2**
(43) Date of publication of application: **22.02.2012**
(21) Application number: 11175844.7
(22) Date of filing: 28.07.2011
(51) Int. Cl.: F25D 17/02, F25B 25/00, F24D 11/02

(54) **Heat cycle system**

(30) Priority: 30.07.2010 JP 2010172268
(71) Applicant: Hitachi Ltd., Tokyo 100-8280 (JP)
(72) Inventor: Imanishi, Yuto, Tokyo, 100-8220 (JP); Sawada, Itsuro, Tokyo, 100-8220 (JP); Osaka, Tadashi, Tokyo, 100-8220 (JP); Sekiya, Sachio, Tokyo, 100-8220 (JP)
(74) Representative: MERH-IP Matias Erny Reichl Hoffmann

(57) **Abstract**

A heat cycle system includes: a refrigerating cycle system 1000 that circulates a refrigerant; a medium circulation circuit 2000, 3000 that includes a circulation pump 5A, 5B for circulating a heat-transfer medium, and adjusts a temperature of a temperature control target with the heat-transfer medium; a heat exchanger 10A, 10B that executes heat exchange between the refrigerant in the refrigerating cycle system 1000 and the heat-transfer medium in the medium circulation circuit; and a volume altering unit 8 that alters a volume of the heat-transfer medium circulating in the medium circulation circuit.

## Description

The disclosure of the following priority application is herein incorporated by reference: Japanese Patent Application No. 2010-172268 filed July 30, 2010.

The present invention relates to a heat cycle system.

Components such as a vehicle drive motor and an inverter in a hybrid vehicle are cooled and the air inside the cabin is conditioned through a system that circulates a heat-transfer medium such as cooling water in the known art. For instance, the invention disclosed in Japanese Patent Gazette No. 4285292 makes it possible to cool the components and cool the air within the cabin at the same time by cooling a heat-transfer medium through a refrigerating cycle. The various components (the motor, the inverter and the like) are cooled and the air within the cabin is conditioned as the heat-transfer medium is circulated.

When the temperature of components must be lowered quickly or the air-conditioning system needs to react quickly, a target temperature should be achieved as soon as possible by assuring a quick temperature response in the circulating heat-transfer medium. At the same time, it is desirable to minimize the extent to which the temperature of the circulating heat-transfer medium fluctuates in order to save power at the compressor or in order to minimize the extent to which the temperature of the air output through the air-conditioning system fluctuates. In addition, fluctuation of the heat-transfer medium temperature should be minimized so as to lessen the extent to which changes in the exothermic values at the various components affect the temperature change in the heat-transfer medium and the extent to which change in the outside temperature affects temperature change in the heat-transfer medium.

However, with the systems proposed in the related art, it is difficult to meet those apparently conflicting requirements and the temperature response speed of the heat-transfer medium cannot be altered in correspondence to various conditions.

According to the lst aspect of the present invention, a heat cycle system comprises: a refrigerating cycle system that circulates a refrigerant; a medium circulation circuit that includes a circulation pump for circulating a heat-transfer medium, and adjusts a temperature of a temperature control target with the heat-transfer medium; a heat exchanger that executes heat exchange between the refrigerant in the refrigerating cycle system and the heat-transfer medium in the medium circulation circuit; and/or a volume altering unit that alters a volume of the heat-transfer medium circulating in the medium circulation circuit.

According to the 2nd aspect of the present invention, in the heat cycle system according to the lst aspect, it is preferred that the volume altering unit comprises: a container connected to the circulation circuit and filled with the heat-transfer medium; a movable partitioning wall movably disposed inside the container, which separates a space inside the container into a first space connected to the circulation circuit and a second space that is not connected to the circulation circuit; and a passage through which the heat-transfer medium is allowed to move between the first space and the second space when the movable partitioning wall moves.

According to the 3rd aspect of the present invention, in the heat cycle system according to the 2nd aspect, it is preferred that the heat cycle system further comprises a drive control unit that moves the movable partitioning wall so as to reduce a volumetric capacity of the first space when a temperature response speed of the heat-transfer medium in the circulation circuit needs to be raised and moves the movable partitioning wall so as to increase the volumetric capacity of the first space when the temperature response speed of the heat-transfer medium in the circulation circuit needs to be lowered.

According to the 4th aspect of the present invention, in the heat cycle system according to the 3rd aspect, it is preferred that: the heat cycle system further comprises a temperature sensor that detects a temperature of the heat-transfer medium; the drive control unit moves the movable partitioning wall so as to reduce the volumetric capacity of the first space connected to the circulation circuit if the temperature detected via the temperature sensor has not reached a predetermined temperature level.

According to the 5th aspect of the present invention, in the heat cycle system according to the 4th aspect, it is preferred that once the temperature detected via the temperature sensor reaches the predetermined temperature, the drive control unit moves the movable partitioning wall so that the first space connected to the circulation circuit achieves an optimal volumetric capacity.

According to the 6th aspect of the present invention, in the heat cycle system according to the 3rd aspect, it is preferred that the drive control unit moves the movable partitioning wall so as to increase the volumetric capacity of the first space connected to the circulation circuit when the temperature of the temperature control target is predicted to fluctuate based upon operating state information pertaining to the temperature control target.

According to the 7th aspect of the present invention, in the heat cycle system according to the lst aspect, it is preferred that the heat cycle system further comprises: a container that includes a first space and a second space separated from each other by a movable partitioning wall that is capable of moving; a passage through which the heat-transfer medium is allowed to move between the first space and the second space when the movable partitioning wall moves; a radiating circuit that radiates heat from the heat-transfer medium; a switching unit that executes a switchover to select a first connection state in which the first space is connected to the circulation circuit and the second space is connected to the radiating circuit or a second connection state in which the second space is connected to the circulation circuit and the first space is connected to the radiating circuit; and a drive control unit that moves the movable partitioning wall so as to reduce a volumetric capacity of the first space when a temperature response speed of the heat-transfer medium in the circulation circuit needs to be raised and moves the movable partitioning wall so as to increase the volumetric capacity of the first space when the temperature response speed of the heat-transfer medium in the circulation circuit needs to be lowered.

According to the 8th aspect of the present invention, in the heat cycle system according to any one of the 2nd through 7th aspects, it is preferred that the movable partitioning wall is constituted partially or entirely of an adiabatic material.

According to the 9th aspect of the present invention, in the heat cycle system according to the 1st aspect, it is preferred that the volume altering unit comprises; a plurality of medium paths with varying volumetric capacities; and a medium paths switching unit that selects one medium path among the plurality of medium paths and connects the selected medium path to the circulation circuit.

According to the 10th aspect of the present invention, in the heat cycle system according to the 1st aspect, it is preferred that the volume altering unit comprises: a first medium path; a second medium path in which a medium storage tank is disposed; and a medium path switching unit that selects either the first medium path or the second medium path and connects the selected medium path to the circulation circuit.

### BRIEF DESCRIPTION OF THE DRAWINGS

FIG. 1 schematically illustrates the configuration of a component cooling/air-conditioning system for an electric vehicle adopting the heat cycle system according to the present invention.
FIG. 2 schematically illustrates the structure of the volume altering tank 8.
FIG. 3 shows the valve state assumed at the four-way valve 3 during a dehumidifying operation.
FIG. 4 shows the valve state assumed at the four-way valve 3 during an air heating operation.
FIG. 5 shows the valve state assumed at the four-way valve 3 during an air heating/component cooling operation.
FIG. 6 presents a flowchart of the control processing executed to control the air-conditioning volume altering tank 8A.
FIG. 7 presents a flowchart of the control processing executed to control the component cooling volume altering tank 8B.
FIG. 8 schematically illustrates the structure of the component cooling volume altering tank 8B in a second embodiment assuming the standard mode.
FIG. 9 shows the component cooling volume altering tank 8B in the reverse mode.
FIG. 10 shows a third embodiment.
FIG. 11 shows a fourth embodiment.
FIG. 12 shows a fifth embodiment.
FIG. 13 shows a sixth embodiment.
FIGS. 14A and 14B present other examples of volume altering tanks 8.

### DESCRIPTION OF PREFERRED EMBODIMENTS

In the embodiments described below, the present invention is adopted in the component cooling/air-conditioning system of a pure electric vehicle that exclusively uses a motor as the sole drive source of the vehicle. However, the present invention is not limited to this example and it may be adopted equally effectively in component cooling/air-conditioning systems for a motorized vehicle such as a railway train or a construction vehicle, a motorized vehicle that is driven by both an internal combustion engine and an electric motor, e.g., a hybrid vehicle (passenger vehicle), a hybrid freight vehicle such as a hybrid truck or a hybrid public transportation vehicle such as a hybrid bus, and the like. The following is a description of preferred embodiments of the present invention, given in reference to the drawings.

― First Embodiment ―

### (Component cooling/air-conditioning system)

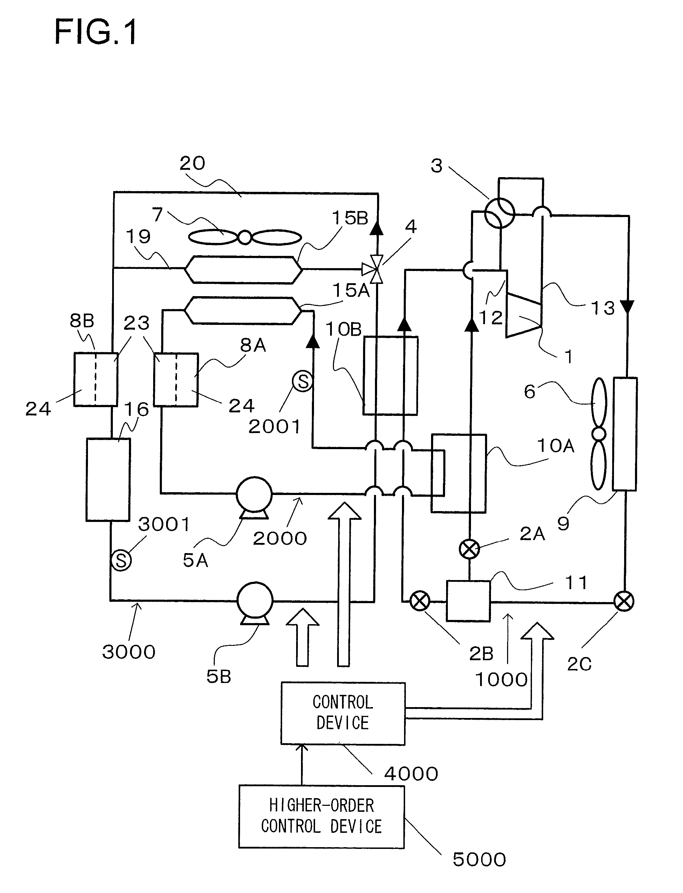

FIG. 1 schematically illustrates the configuration of the component cooling/air-conditioning system of an electric vehicle adopting the heat cycle system according to the present invention. The component cooling/air-conditioning system shown in FIG. 1 includes a refrigerating cycle circuit 1000 and an air-conditioning circuit 2000 constituting an air-conditioning system that adjusts the condition of the air inside the cabin, and a component cooling circuit 3000 constituting a temperature control system, which adjusts the temperature of a temperature control target component 16 that generates heat, such as a motor, an inverter, a traveling drive battery or a gearbox. The component cooling/air-conditioning system, which includes the refrigerating cycle circuit 1000, the air-conditioning circuit 2000 and the component cooling circuit 3000, is controlled by a control device 4000. It is to be noted that information (such as required motor torque information) needed by the control device 4000 for purposes of control, is input to the control device 4000 from a higher-order control device 5000 located on the vehicle side.

The refrigerating cycle circuit 1000 is filled with the refrigerant R134a, which is known as an air conditioning refrigerant, may be utilized as the refrigerant in the refrigerating cycle circuit. In addition, an air-conditioning heat-transfer medium circulates through the air-conditioning circuit 2000, whereas a component cooling heat-transfer medium circulates through the component cooling circuit 3000. The air-conditioning heat-transfer medium and the component cooling heat-transfer medium may each be constituted with a coolant.

An air-conditioning heat exchanger 10A is disposed between the refrigerating cycle circuit 1000 and the air-conditioning circuit 2000, whereas a component cooling heat exchanger 10B is disposed between the refrigerating cycle circuit 1000 and the component cooling circuit 3000. Via the air-conditioning heat exchanger 10A, heat is exchanged between the refrigerant charged in the refrigerating cycle circuit 1000 and the air-conditioning heat-transfer medium circulating through the air-conditioning circuit 2000. Likewise, heat is exchanged between the refrigerant charged in the refrigerating cycle circuit 1000 and the component cooling heat-transfer medium circulating through the component cooling circuit 3000 via the component cooling heat exchanger 10B.

At the refrigerating cycle circuit 1000, a compressor 1 that compresses the refrigerant, an outside air heat exchanger 9 that achieves heat exchange between the refrigerant and the outside air, and the air-conditioning heat exchanger 10A mentioned earlier are connected in a circle. In addition, an outside air blower fan 6 used to supply outside air is installed at the outside air heat exchanger 9. A four-way valve 3 is disposed between an intake piping 12 and an outlet piping 13 at the compressor 1. As the valve state assumed at the four-way valve 3 is switched, either the intake piping 12 or the outlet piping 13 becomes connected with the outside air heat exchanger 9 and the other piping not connected with the outside air heat exchanger becomes connected to the air-conditioning heat exchanger 10A.

FIG. 1 shows the valve state assumed at the four-way valve 3 during an air cooling operation. Via the four-way valve, the outlet piping 13 is connected with the outside air heat exchanger 9 and the intake piping 12 is connected with the air-conditioning heat exchanger 10A. For the air heating operation or the air heating/component cooling operation to be detailed later, however, the four-way valve 3 is switched so as to connect the outlet piping 13 with the air-conditioning heat exchanger 10A and connect the intake piping 12 with the outside air heat exchanger 9.

A receiver 11 is disposed between the outside air heat exchanger 9 and the air-conditioning heat exchanger 10A. The refrigerant path is branched into two separate paths at the receiver 11. One of the two paths is a refrigerant path in which the air-conditioning heat exchanger 10A is present, whereas the component cooling heat exchanger 10B is present in the other refrigerant path. The two refrigerant path branches join each other and become a single path at the intake piping 12 of the compressor 1. Reference numerals 2A to 2C indicate flow rate control valves via which the refrigerant flow rate is controlled. The flow rate of the refrigerant flowing through the air-conditioning heat exchanger 10A is controlled via the flow rate control valve 2A, the flow rate of the refrigerant flowing through the component cooling heat exchanger 10B is controlled via the flow rate control valve 2B, and the flow rate of the refrigerant flowing through the outside air heat exchanger 9 is controlled via the flow rate control valve 2C.

The air-conditioning circuit 2000 includes an air conditioning-side cabin heat exchanger 15A, an air-conditioning volume altering tank 8A where the air-conditioning heat-transfer medium is stored, an air-conditioning circulation pump 5A via which the air-conditioning heat-transfer medium is circulated and the air-conditioning heat exchanger 10A connected in this order in a circle. An cabin fan 7, which blows air into the cabin, is installed at the air conditioning-side cabin heat exchanger 15A. At the air conditioning-side heat exchanger 15A, heat is exchanged between the air-conditioning heat-transfer medium and the air blown into the cabin via the cabin fan 7. Reference numeral 2001 indicates a temperature sensor that detects the temperature of the heat-transfer medium flowing through the air-conditioning circuit 2000, and the detection results provided by the temperature sensor are input to the control device 4000.

The component cooling circuit 3000 includes a component cooling-side cabin heat exchanger 15B, a component cooling volume altering tank 8B where the component cooling heat-transfer medium is stored, the temperature control target component 16, a component cooling circulation pump 5B through which the component cooling heat-transfer medium is circulated and the component cooling heat exchanger 10B connected in this order in a circle. The temperature control target component 16 in the embodiment may be a motor, an inverter, a battery or a gearbox. The cabin fan 7 mentioned earlier blows air from the bottom side toward the top side in the figure, and the component cooling-side cabin heat exchanger 15B is disposed further downstream of the air conditioning-side cabin heat exchanger 15A along the air blowing direction. Thus, the air flowing out of the air conditioning-side cabin heat exchanger 15A first undergoes heat exchange with the component cooling heat-transfer medium at the component cooling-side cabin heat exchanger 15B before it is released into the cabin.

In addition, a bypass circuit 20, which circumvents the cabin heat exchanger 15B in a primary circuit 19, is disposed at the component cooling circuit 3000. A three-way valve 4 is installed at the intake to the bypass circuit 20. By switching the three-way valve 4, either the primary circuit 19 or the bypass circuit 20 can be selected as the path through which the component cooling heat-transfer medium is to flow. Reference numeral 3001 indicates a temperature sensor that detects the temperature of the heat-transfer medium flowing through the component cooling circuit 3000 and the detection results provided by the temperature sensor are input to the control device 4000.

At the air-conditioning volume altering tank 8A, the volume of the air-conditioning heat-transfer medium circulating through the air-conditioning circuit 2000 can be altered. Likewise, the volume of the component cooling heat-transfer medium circulating through the component cooling circuit 3000 can be altered at the component cooling volume altering tank 8B. It is to be noted that while the heat cycle system in the embodiment includes both the air-conditioning volume altering tank 8A and the component cooling volume altering tank 8B, the present invention may be adopted in a structure that includes only one of them.

### (Structure of volume altering tanks)

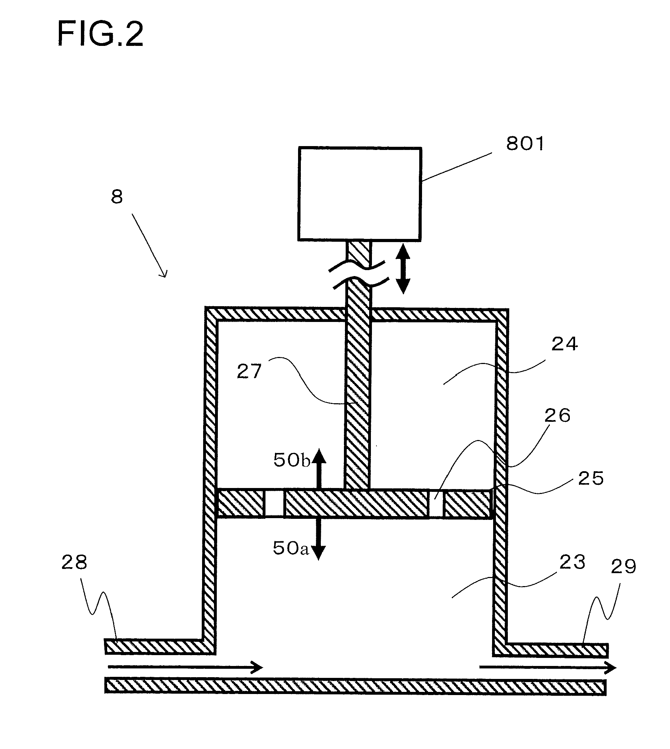

The air-conditioning volume altering tank 8A and the component cooling volume altering tank 8B shown in FIG. 1 assume identical structures and FIG. 2 schematically illustrates the structure of a volume altering tank 8 applicable to both of them. The volume altering tank 8 includes an adiabatic partition 25 which separates the tank internal space into a first space 23 and a second space 24. An inflow port 28 and an outflow port 29 are located in the first space 23, and with the inflow port and the outflow port connected with a circulation circuit, the first space 23 forms part of the circulation circuit.

The inflow port 28 and the outflow port 29 of the volume altering tank 8 used as the air-conditioning volume altering tank 8A are respectively connected to the air conditioning-side cabin heat exchanger 15A and the air-conditioning circulation pump 5A. The first space 23 in the tank thus constitutes part of the air-conditioning circuit 2000. Likewise, the inflow port 28 and the outflow port 29 of the volume altering tank 8 used as the component cooling volume altering tank 8B are respectively connected to the component cooling-side cabin heat exchanger 15B and the component cooling circulation pump 5B, and the first space 23 thus constitutes part of the component cooling circuit 3000.

A communicating hole 26, which communicates between the first space 23 and the second space 24, is formed in the adiabatic partition 25 and the heat-transfer medium also fills the second space 24. The adiabatic partition 25 is locked to a drive shaft 27 of an actuator 801. As the drive shaft 27 is caused to move up or down via the actuator 30, the adiabatic partition 25 is displaced along the direction indicated by an arrow 50a or an arrow 50b, thereby altering the volumetric capacities of the spaces 23 and 24, and causing the heat-transfer medium to travel from the first space 23 into the second space 24 or vice versa through the communicating hole 26. As a result, the volume of the heat-transfer medium in the circulation circuit (the air-conditioning circuit 2000 or the component cooling circuit 3000), increases. The change in volumetric capacity of the first space 23 can be detected by detecting the extent by which the adiabatic partition 25 is displaced.

It is to be noted that while the first space 23 and the second space 24 are in communication with each other via the communicating hole 26, only a very small quantity of the heat-transfer medium moves via the communicating hole 26 as long as the adiabatic partition 25 remains at a given position and thus, the second space 24 does not need to be considered part of the circulation circuit while the adiabatic partition 25 is stationary. Namely, the heat-transfer medium may be considered to travel through the communicating hole 26 only when the adiabatic partition 25 is displaced. In addition, the adiabatic partition 25 is constituted of an adiabatic material (e.g., a synthetic resin) with low thermal conductivity, so as to minimize the extent of heat exchange between the heat-transfer medium in the first space 23 and the heat-transfer medium in the second space 24. It is to be noted that the entire adiabatic partition 25 may be formed by using an adiabatic material or only part of the adiabatic partition (e.g., the surface that comes in contact with the heat-transfer medium) may be constituted of an adiabatic material.

By altering the volumetric capacity of the first space 23 in the volume altering tank 8 as described above, the thermal capacity of the heat-transfer medium circulating through the circulation circuit can be adjusted. As the volumetric capacity of the first space 23 becomes smaller, the overall quantity of heat-transfer medium circulating through the circulation circuit is reduced and thus its thermal capacity is reduced, which, in turn, raises the speed with which the temperature of the heat-transfer medium changes (i.e., the temperature response speed) relative to the quantity of thermal energy flowing in/out. In contrast, if the volumetric capacity of the first space 23 becomes larger, the total quantity of heat-transfer medium circulating through the circulation circuit increases and the thermal capacity is increased, which, in turn, lowers the speed with which the temperature of the heat-transfer medium changes. Namely, the temperature response speed of the heat-transfer medium can be set to an optimal level corresponding to the current conditions by altering the volumetric capacity of the first space 23 in the volume altering tank 8.

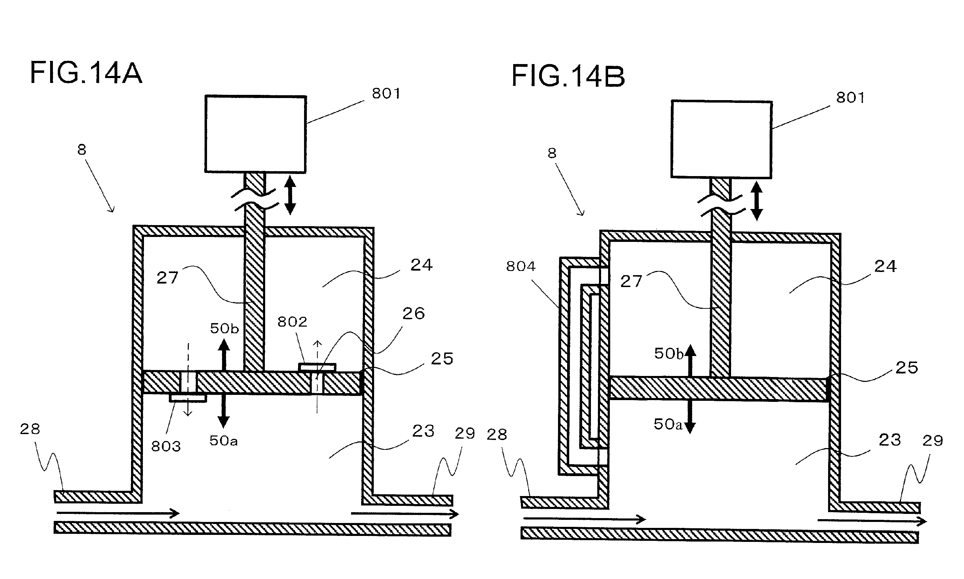

Space communicating holes 26, which can be opened/closed freely, as shown in FIG. 14A, may be formed at the adiabatic partition 25. The volume altering tank 8 in FIG. 14A includes valve elements 802 and 803 disposed at the communicating holes 26. As the adiabatic partition 25 in the volume altering tank 8 adopting this structure is driven downward (along the direction indicated by the arrow 50a), the valve element 802 opens, thereby causing the heat-transfer medium to travel from the first space 23 into the second space 24, as indicated by the dotted line arrow. If, on the other hand, the adiabatic partition 25 is driven upward (along the direction indicated by the arrow 50b), the valve element 803 opens, causing the heat-transfer medium to travel from the second space 24 into the first space 23, as indicated by the dotted line arrow.

As long as the adiabatic partition 25 remains stationary, the valve elements 802 and 803 are closed and the heat-transfer medium does not pass through. In this state, the extent of heat exchange between the heat-transfer medium in the first space 23 and the heat exchange medium in the second space 24 is minimal. Through these measures, the temperature response speed of the heat-transfer medium can be adjusted with better ease.

FIG. 14B shows a structure that includes a piping 804 that communicates between the first space 23 and the second space 24, in place of a communicating hole 26 formed at the adiabatic partition 25. This structural example, too, may include a pair of pipings 804 with the valve element 802 installed at one of them and the valve element 803 installed at the other.

Next, the operations of the component cooling/air-conditioning system shown in FIG. 1 are described. The temperature of the temperature control target component 16 is controlled by engaging the component cooling circulation pump 5B in operation in the embodiment. The operations of the other components are adjusted in correspondence to the air-conditioning load and the quantity of heat generated from the temperature control target component 16. An air cooling operation, a dehumidifying operation, an air heating operation and an air heating/component cooling operation are described individually below.

### (Air cooling operation)

The term "air cooling operation" refers to an operation mode in which the outside air heat exchanger 9 is utilized as a condenser and the air-conditioning heat exchanger 10A and the component cooling heat exchanger 10B are each utilized as an evaporator so as to transfer heat from the air-conditioning circuit 2000 and the component cooling circuit 3000 to the refrigerating cycle circuit 1000. In the air cooling operation, the four-way valve 3 installed in the refrigerating cycle circuit 1000 assumes the valve state shown in FIG. 1. Namely, the outlet piping 13 at the compressor 1 is connected to the outside air heat exchanger 9 and the intake piping 12 at the compressor 1 is connected to the air-conditioning heat exchanger 10A and the component cooling heat exchanger 10B.

The refrigerant, having been compressed at the compressor 1, becomes liquefied as its heat is released via the outside air heat exchanger 9. The refrigerant is then divided into refrigerant to flow toward the air-conditioning heat exchanger 10A and refrigerant to flow toward the component cooling heat exchanger 10B. The refrigerant to flow into the air-conditioning heat exchanger 10A is first depressurized at the air conditioning-side flow rate control valve 2A so as to achieve a lower temperature and a lower pressure. It then enters the air-conditioning heat exchanger 10A where it absorbs heat from the air-conditioning heat-transfer medium in the air-conditioning circuit 2000 and thus becomes evaporated. The refrigerant vapor travels through the four-way valve 3 to return to the compressor 1. The refrigerant to flow into the component cooling heat exchanger 10B, on the other hand, is depressurized at the component cooling-side flow rate control valve 2B so as to achieve a lower temperature and a lower pressure, and then it enters the component cooling heat exchanger 10B where it absorbs heat from the component cooling heat-transfer medium in the component cooling circuit 3000 and thus becomes evaporated before returning to the compressor 1.

In the air-conditioning circuit 2000, the air conditioning heat-transfer medium, having been cooled at the air-conditioning heat exchanger 10A is delivered to the air conditioning-side cabin heat exchanger 15A as the air-conditioning circulation pump 5A is driven. The cabin fan 7 is driven so as to blow the air, having been cooled through the heat exchange achieved via the air conditioning-side cabin heat exchanger 15A, into the cabin. In addition, in the component cooling circuit 3000, heat generated at the temperature control target component 16 is applied to the component cooling heat-transfer medium circulated by the component cooling circulation pump 5B and the component cooling heat-transfer medium is also cooled as it exchanges heat with the refrigerant in the refrigerating cycle circuit 1000 at the component cooling heat exchanger 10B.

In the air cooling operation mode described above, both the air-conditioning heat exchanger 10A and the component cooling heat exchanger 10B are utilized as evaporators, so as to lower the cabin temperature and cool the temperature control target component 16 at the same time. In addition, the configuration shown in FIG. 1 includes the air-conditioning heat exchanger 10A and the component cooling heat exchanger 10B connected in parallel to the intake piping 12 of the compressor 1 and the air conditioning-side flow rate control valve 2A and the component cooling-side flow rate control valve 2B installed at the individual refrigerant circuits. The flow rates of the refrigerant flowing into the air-conditioning heat exchanger 10A and the component cooling heat exchanger 10B can thus be freely adjusted independently of each other.

As a result, the temperature of the component cooling heat-transfer medium and the temperature of the air-conditioning heat-transfer medium can be individually controlled at desired levels. For instance, even when the temperature of the air-conditioning heat-transfer medium is lowered significantly in order to cool the cabin air, the temperature of the component cooling heat-transfer medium connected with the temperature control target component 16 can be sustained at a higher level by keeping down the flow rate of the refrigerant flowing to the component cooling heat exchanger 10B. It is to be noted that the temperature of the component cooling heat-transfer medium can be controlled by controlling the degree of openness of the component cooling-side flow rate control valve 2B. Simply put, the degree of openness should be controlled so as to increase if the temperature of the component cooling heat-transfer medium is high and narrow the opening if the temperature of the component cooling heat-transfer medium is low.

It is to be noted that the temperature control capability of the refrigerating cycle circuit 1000 can be adjusted by controlling the rotation rate of the compressor 1, thereby ensuring that the temperature of the air-conditioning heat-transfer medium is adjusted to a desired level. By lowering the control target temperature set for the air-conditioning heat-transfer medium whenever the air cooling load is judged to be significant and raising the control target temperature set for the air-conditioning heat-transfer medium whenever the air cooling load is judged to be small, the air-conditioning performance can be controlled to assure optimal air-conditioning performance for the particular load.

In addition, when there is no air cooling load and the temperature control target component 16 in the component cooling circuit 3000 simply needs to be cooled, the air-conditioning circulation pump 5A and the cabin fan 7 should be turned off and the air conditioning-side flow rate control valve 2A should be closed. In this case, the component cooling heat exchanger 10B alone should be utilized as an evaporator by adjusting the degree of openness of the component cooling-side flow rate control valve 2B. Under such control, the component cooling heat-transfer medium in the component cooling circuit 3000 can be cooled and thus, the temperature control target component 16 can be cooled down. In this situation, the rotation rate of the compressor 1 is controlled so as to set the temperature of the component cooling heat-transfer medium to the target temperature level. In addition, the extent of heat exchange may be altered by controlling the rotation rate of the air-conditioning circulation pump 5A, as well.

### (Dehumidifying operation)

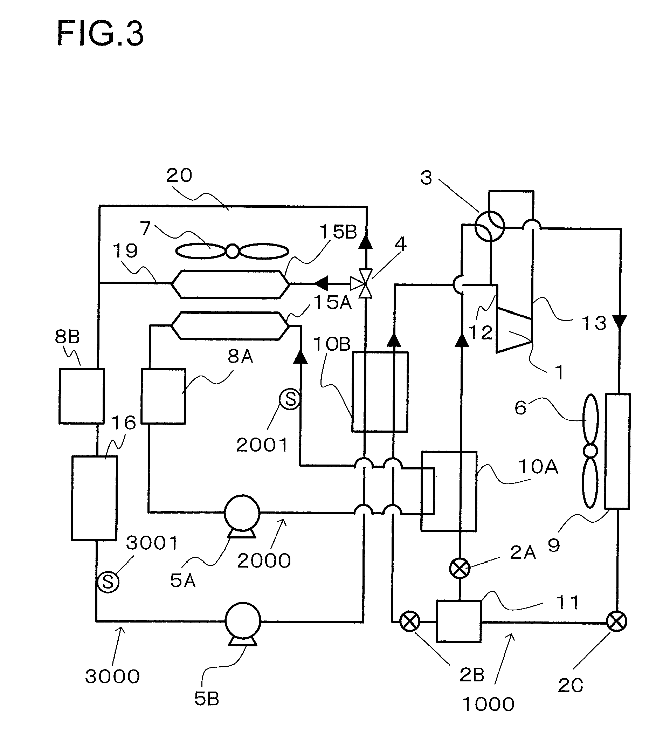

FIG. 3 shows the valve state assumed at the four-way valve 3 during the dehumidifying operation. It is to be noted that FIG. 3 does not include an illustration of the control device 4000 and the higher-order control device 5000. In the dehumidifying operation, the valve state of the three-way valve 4 installed in the component cooling circuit 3000 is controlled so as to supply the component cooling heat-transfer medium achieving a high temperature into the primary circuit 19 where the component cooling-side cabin heat exchanger 15B is located. By delivering the high-temperature cooling heat-transfer medium into the component cooling-side cabin heat exchanger 15B, an operation often referred to as a "reheating/dehumidifying operation", through which air having been cooled and dehumidified at the air conditioning-side cabin heat exchanger 15A becomes heated at the component cooling-side cabin heat exchanger 15B before it is blown into the cabin, is enabled. Since the relative humidity of the air supplied into the cabin during the dehumidifying operation is lowered, passenger comfort in the cabin space is improved.

It is to be noted that the heat source of the component cooling-side cabin heat exchanger 15B utilized as a re-heater originates as "exhaust heat" at the temperature control target component 16. This means that since reheating is achieved without having to provide additional energy via a heater or the like, passenger comfort in the cabin can be improved without increasing power consumption.

The reheating quantity, which changes in correspondence to the temperature and the flow rate of the component cooling heat-transfer medium flowing into the primary circuit 19, can be controlled by adjusting the extent of heat exchange achieved at the component cooling heat exchanger 10B and the flow rate of the component cooling heat-transfer medium flowing to the primary circuit 19. The extent of heat exchange achieved at the component cooling heat exchanger 10B can be adjusted by controlling the degree of openness of the component cooling-side flow rate control valve 2B so as to regulate the flow rate of the refrigerant flowing to the component cooling heat exchanger 10B. If the temperature control target component does not need to be cooled, the component cooling-side flow rate control valve 2B should be set in the fully closed state.

### (Air heating operation)

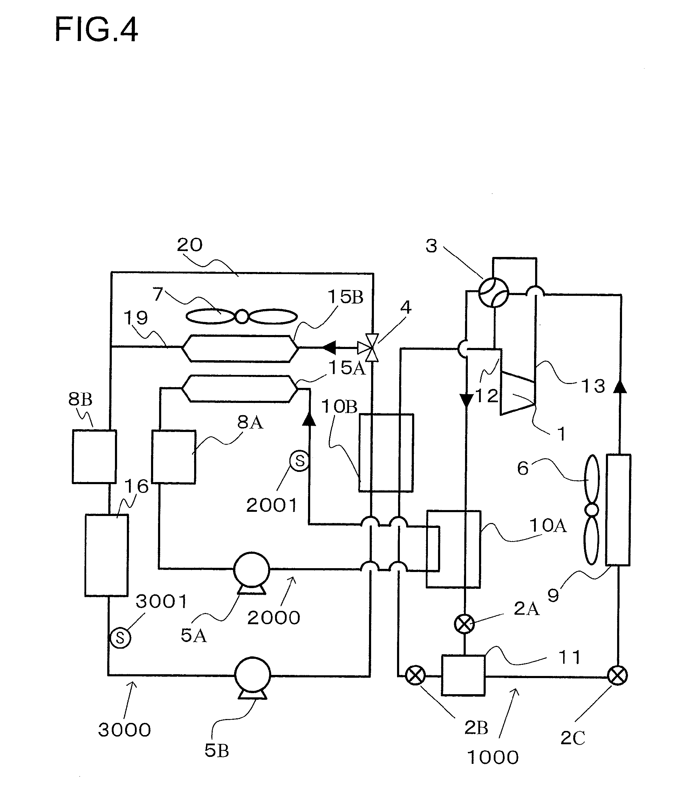

FIG. 4 shows the valve state assumed at the four-way valve 3 during an air heating operation. It is to be noted that the figure does not include an illustration of the control device 4000 and the higher-order control device 5000. Depending upon the air heating load, either of the two different operation modes is assumed in the air heating operation. In the first operation mode, which is a radiating operation mode assumed when the air heating load is small, the exhaust heat from the temperature control target component 16 is utilized for purposes of air heating the cabin air without engaging the refrigerating cycle circuit 1000 in the air heating operation. The second operation mode is an air heating/radiating operation mode assumed when the required air heating load cannot be met with the exhaust heat from the temperature control target component 16 alone. In this operation mode, the refrigerating cycle circuit 1000 is engaged in operation in addition to utilization of the exhaust heat from the temperature control target component 16.

In the first operation mode, i.e., the radiating operation mode, the component cooling heat-transfer medium is delivered to the component cooling-side cabin heat exchanger 15B by starting up the component cooling circulation pump 5B and the cabin fan 7 and controlling the valve state at the three-way valve 4. The component cooling heat-transfer medium having been heated at the temperature control target component 16 becomes cooled as its heat is released into the air to be blown into the cabin at the component cooling-side cabin heat exchanger 15B. As a result, the air being blown into the cabin becomes heated. By utilizing the exhaust heat from the temperature control target component 16 in the air heating operation as described above, the cabin air can be conditioned while minimizing energy consumption.

In the second operation mode, i.e., the air heating/radiating operation mode, the four-way valve 3 in the refrigerating cycle circuit 1000 is switched to the valve state shown in FIG. 4 in order to connect the outlet piping 13 of the compressor 1 to the air-conditioning heat exchanger 10A and the intake piping 12 of the compressor 1 to the outside air heat exchanger 9. Namely, a cycle with the air-conditioning heat exchanger 10A functioning as a condenser and the outside air heat exchanger 9 functioning as an evaporator is formed.

The refrigerant having been compressed at the compressor 1 becomes condensed and liquefied as its heat is released into the air-conditioning heat-transfer medium at the air-conditioning heat exchanger 10A. Subsequently, it is first depressurized at the flow rate control valve 2C. It then it evaporates and becomes gasified as it exchanges heat with the outside air at the outside air heat exchanger 9, before it travels back to the compressor 1. In this operation mode, the flow rate control valve 2A is set in the fully open state, the flow rate control valve 2B is set in the fully closed state and the component cooling heat exchanger 10B is not utilized.

As the air-conditioning circulation pump 5A is started up, the air-conditioning heat-transfer medium is circulated through the air-conditioning circuit 2000 where it becomes heated at the air-conditioning heat exchanger 10A with the heat of the refrigerant condensation. The air-conditioning heat-transfer medium thus heated flows into the air conditioning-side cabin heat exchanger 15A, where its heat is released into the air to be blown into the cabin. The air having become heated at the air conditioning-side cabin heat exchanger 15A then travels to the component cooling-side cabin heat exchanger 15B located further downstream in the air flow. At the component cooling-side cabin heat exchanger 15B, the air receives heat from the component cooling heat-transfer medium, which has been heated at the temperature control target component 16, and thus becomes further heated before it is blown into the cabin space.

As described above, the air to be blown into the cabin is first heated through the refrigerating cycle circuit 1000 and is then further heated with the exhaust heat from the temperature control target component 16. This means that the temperature of the air output from the air conditioning-side cabin heat exchanger 15A can be sustained at a low level relative to the temperature of the air being blown into the cabin from the component cooling-side cabin heat exchanger 15B. Namely, by utilizing the exhaust heat from the temperature control target component 16 in the air heating operation, an energy efficient air-conditioning system is provided.

Furthermore, through control of the temperature control capability of the refrigerating cycle circuit 1000, optimal control of the temperature of the component cooling heat-transfer medium corresponding to the heat generated at the temperature control target component 16 is enabled. When more heat is generated at the temperature control target component 16, the temperature of the component cooling heat-transfer medium rises and accordingly, the temperature control capability of the refrigerating cycle circuit 1000 is lowered in this state. Since the quantity of heat released from the air conditioning-side cabin heat exchanger 15A is thereby reduced, the temperature of the air flowing into the component cooling-side cabin heat exchanger 15B becomes lowered, which, in turn, increases the amount of heat released from the component cooling heat-transfer medium, thereby preventing an increase in the temperature of the component cooling heat-transfer medium. In contrast, when the temperature control target component 16 generates less heat, the temperature of the component cooling heat-transfer medium becomes lowered. Accordingly, the temperature control capability of the refrigerating cycle circuit 1000 is increased so as to raise the temperature of the air flowing from the air conditioning-side cabin heat exchanger 15A into the component cooling-side cabin heat exchanger 15B and ultimately prevent a decrease in the temperature of the component cooling heat-transfer medium.

In more specific terms, the temperature control capability of the refrigerating cycle circuit 1000 may be controlled by controlling the rotation rate of the compressor 1. In addition, there is an added advantage to the control under which the temperature of the component cooling heat-transfer medium is sustained within a predetermined temperature range, in that an undesirable state in which the temperature of the temperature control target component 16 deviates from the tolerable operation range is averted.

### (Air heating/component cooling operation)

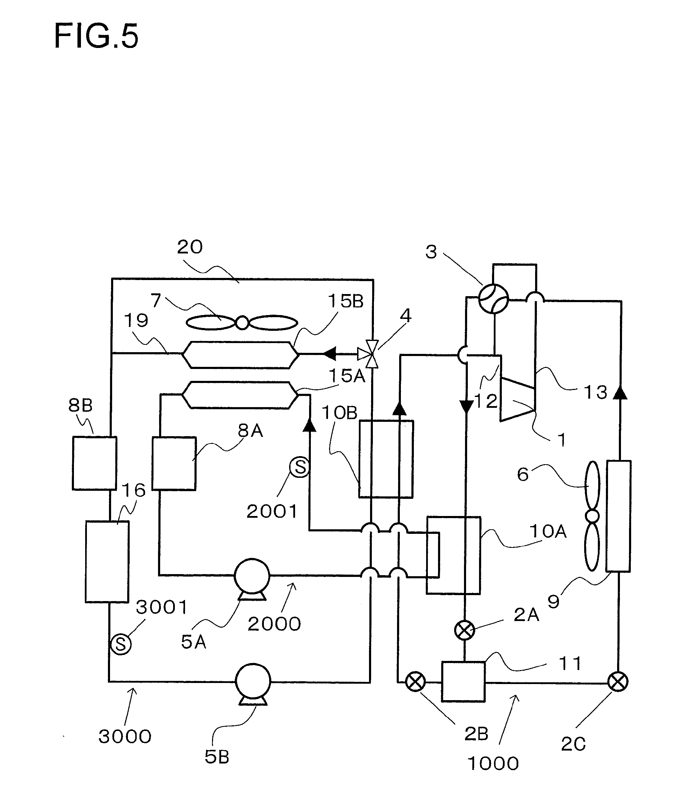

FIG. 5 shows the valve state assumed at the four-way valve 3 during an air heating/component cooling operation. It is to be noted that the figure does not include an illustration of the control device 4000 and the higher-order control device 5000. While the target temperature for the component cooling heat-transfer medium should be raised whenever the air heating load is significant, as explained earlier, the level of air heating performance cannot be increased if the temperature of the component cooling heat-transfer medium cannot be raised due to restrictions related to the specifications of the temperature control target component 16. Under such circumstances, an air heating/component cooling operation is executed as described below so as to cool the component cooling heat-transfer medium and heat the air-conditioning heat-transfer medium at the same time.

As in the air heating/radiating operation mode, a cycle with the air-conditioning heat exchanger 10A functioning as a condenser and the outside air heat exchanger 9 functioning as an evaporator is formed in the air heating/component cooling operation. In addition, the flow rate control valve 2B is opened so as to utilize the component cooling heat exchanger 10B as an evaporator as well. The refrigerant, having been condensed and liquefied at the air-conditioning heat exchanger 10B, branches into two separate flows in the receiver 11. The refrigerant in one of the flow branches is depressurized at the flow rate control valve 2C and then becomes evaporated at the outside air heat exchanger 9 before it travels back to the compressor 1. The refrigerant in the other flow is depressurized at the flow rate control valve 2B located on the component cooling side. It then becomes evaporated and gasified as it cools the component cooling heat-transfer medium at the component cooling heat exchanger 10B before it travels back to the compressor 1.

In the air heating/component cooling operation, the exhaust heat from the temperature control target component 16 is collected at the component cooling heat exchanger 10B as a heat source in the refrigerating cycle circuit 1000, the heat thus collected then travels from the air-conditioning heat exchanger 10A through the air-conditioning circuit 2000 before it is released into the cabin via the air conditioning-side cabin heat exchanger 15A. Thus, the exhaust heat from the temperature control target component 16 can be collected and utilized for cabin air heating while keeping down the temperature of the temperature control target component 16. Furthermore, since heat can be absorbed from the outside air via the outside air heat exchanger 9, the air heating performance can be further improved.

In addition, since the flow rate control valve 2C is installed between the receiver 11 and the outside air heat exchanger 9, the quantity of heat absorbed from the component cooling heat-transfer medium and the quantity of heat absorbed from the outside air can be individually controlled by separately controlling the degree of openness of the flow rate control valve 2B and the flow rate control valve 2C. It is to be noted that if the temperature of the component cooling heat-transfer medium becomes lower than the temperature of the air-conditioning heat-transfer medium, the air having been heated at the air conditioning-side cabin heat exchanger 15A would be cooled at the component cooling-side cabin heat exchanger 15B. However, the air can be blown out into the cabin without becoming cooled by the component cooling heat-transfer medium, having been cooled at the component cooling heat exchanger 10B, by controlling the valve state of the three-way valve 4 in the component cooling circuit 3000 so as to select the bypass circuit 20.

Since an undesirable condition, such as a low output temperature, may arise if the temperature of the component cooling heat-transfer medium is low when the air heating load decreases during the air heating/component cooling operation and the operation thus needs to shift into the air heating/radiating operation mode, it is desirable to raise the temperature of the component cooling heat-transfer medium prior to the mode shift. The temperature of the component cooling heat-transfer medium can be controlled by adjusting the extent of heat exchange achieved via the component cooling heat exchanger 10B. Thus, the degree of openness of the component cooling-side flow rate control valve 2B should be controlled in order to ultimately control the temperature of the component cooling heat-transfer medium. It is to be noted that whenever the temperature of the air-conditioning heat-transfer medium is detected to have become lower than the temperature of the component cooling heat-transfer medium sustained at a high level during the air heating/component cooling operation, the air heating load can be judged to have decreased and accordingly, the operation can shift from the air heating/component cooling operation mode to the air heating/radiating operation mode.

### (Control processing for the volume altering tanks)

In the embodiment, the volumetric capacities of the first spaces 23 in the volume altering tanks 8A and 8B in the air-conditioning circuit 2000 and the component cooling circuit 3000 are adjusted to alter the thermal capacities of the heat-transfer media circulating through the individual circuits and thus, adjust the temperature response speeds of the heat-transfer media. It is to be noted that since the volume altering tanks in the air-conditioning circuit 2000 and the component cooling circuit 3000 are controlled through control operations different from each other, the control operation executed in conjunction with the air-conditioning volume altering tank 8A and the control operation executed in conjunction with the component cooling volume altering tank 8B are described individually below.

### (Control of the air-conditioning volume altering tank 8A)

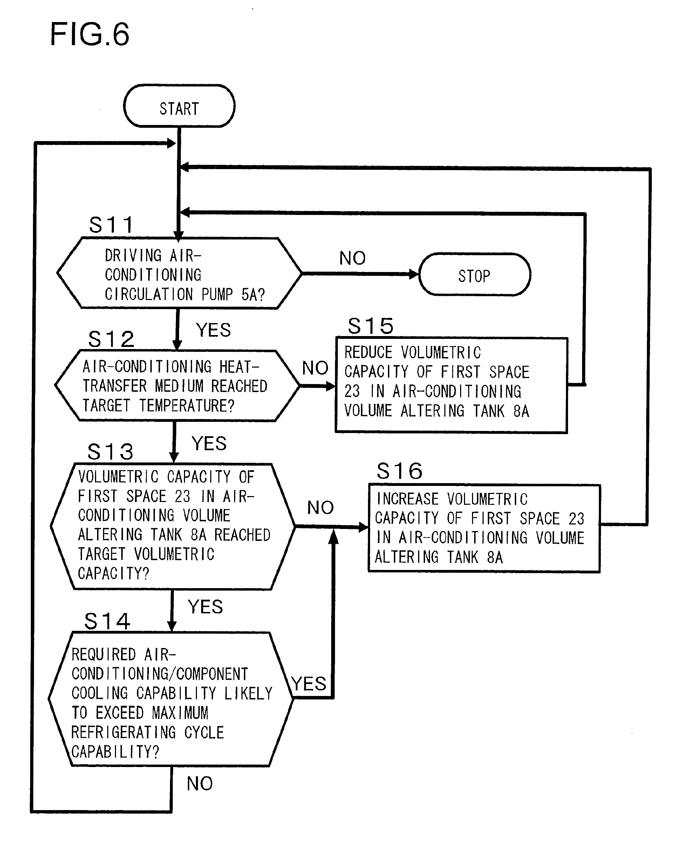

FIG. 6 presents a flowchart of a control operation through which the air-conditioning volume altering tank 8A installed in the air-conditioning circuit 2000 may be controlled. In step S11, a decision is made as to whether or not the air-conditioning circulation pump 5A is currently being driven. If it is decided in step S11 that the air-conditioning circulation pump 5A is being driven, the operation proceeds to step S 12, whereas if it is decided in step S11 that the air-conditioning circulation pump 5A is not being driven, the control processing shown in FIG. 6 ends. The decision-making processing in step S11 is executed in order to determine whether or not to continuously execute the control processing for the air-conditioning volume altering tank 8A based upon whether or not the air-conditioning circulation pump 5A is being driven. Namely, if the air-conditioning circulation pump 5A is currently being driven and the air-conditioning heat-transfer medium is thus being circulated through the air-conditioning circuit 2000, the operation proceeds to step S 12 in order to continue with the control processing for the air-conditioning volume altering tank 8A. If, on the other hand, it is decided in step S11 that the air-conditioning circulation pump 5A is currently in the OFF state, the control processing for the air-conditioning volume altering tank 8A ends since there is no need to engage the air-conditioning volume altering tank 8A in operation.

Even when the air-conditioning circulation pump 5A is being driven and thus the air-conditioning operation is in progress, the temperature of the air blown into the cabin cannot be controlled to an optimal level unless the temperature of the air-conditioning heat-transfer medium has reached the predetermined target temperature. Accordingly, the temperature of the air-conditioning heat-transfer medium, detected via the temperature sensor 2001 shown in FIG. 1, and the target temperature set for the air-conditioning heat-transfer medium are compared and a decision is made in step S12 as to whether or not the temperature of the air-conditioning heat-transfer medium has reached the target temperature. The target temperature is determined by the control device 4000 in correspondence to the temperature setting selected for the air-conditioning system.

If it is decided in step S12 that the heat-transfer medium temperature has not reached the target temperature, the operation proceeds to step S 15. In step S 15, the volumetric capacity of the first space 23 in the air-conditioning volume altering tank 8A is reduced by driving the adiabatic partition 25 shown in FIG. 2 downward, so as to adjust the temperature of the air-conditioning heat-transfer medium to the target temperature quickly. As explained earlier, as the volumetric capacity of the first space 23 in the air-conditioning volume altering tank 8A becomes smaller, the quantity of air-conditioning heat-transfer medium circulating through the air-conditioning circuit 2000 decreases and the thermal capacity of the air-conditioning heat-transfer medium becomes smaller, which, in turn, raises the temperature change rate so as to achieve the target temperature in less time. The extent by which the volumetric capacity is altered in step S 15 may be a predetermined specific extent, or a value corresponding to the difference between the target temperature and the temperature of the air-conditioning heat-transfer medium having been detected may be set as the extent of the volumetric capacity change.

Upon moving the adiabatic partition 25 downward in step S15, the operation returns to step S11, and subsequently the processing in step S11 and the processing in step S 12 are executed again in sequence. Until the temperature of the air-conditioning heat-transfer medium reaches the target temperature, the processing in steps S11, S 12 and S 15 is executed repeatedly. Processing for increasing the rotation rate of the compressor 1 may also be executed in step S 15. In such a case, the air-conditioning heat-transfer medium is able to reach the target temperature more quickly, since the temperature control capability level of the refrigerating cycle circuit 1000 is raised. In addition, at the air-conditioning start, the volumetric capacity of the first space 23 in the air-conditioning volume altering tank 8A is set at the lower limit. Accordingly, the adiabatic partition 25 is not displaced through the processing in step S15 and the volumetric capacity lower limit value is sustained at an air-conditioning startup.

If, on the other hand, it is decided in step S12 that the temperature of the air-conditioning heat-transfer medium has reached the target temperature, the operation proceeds to step S 13. In step S 13, a decision is made as to whether or not the volumetric capacity of the first space 23 in the air-conditioning volume altering tank 8A has reached a pre-selected target volumetric capacity. The target volumetric capacity for the first space 23 in this context refers to an optimal volumetric capacity that assures an air-conditioning heat-transfer medium quantity (total quantity) with an ample margin, which will allow the air-conditioning circuit 2000 to steadily operate at a desired performance level. For instance, the optimal volumetric capacity should assure an air-conditioning heat-transfer medium quantity with a margin that will allow the change in the temperature of the air-conditioning heat-transfer medium to be minimized even when the extent of heat exchange achieved at the air-conditioning heat exchanger 10A fluctuates or the air-conditioning load fluctuates. The volumetric capacity lower limit, assuming a value at which the heat response speed can be temporarily raised, is less than the value set as the target volumetric capacity.

If it is decided in step S13 that the volumetric capacity of the first space 23 has reached the target volumetric capacity, the operation proceeds to step S 14, whereas if it is decided in step S13 that the volumetric capacity of the first space has not reached the target volumetric capacity, the operation proceeds to step S 16. For instance, if the volumetric capacity of the first space 23 has been reduced to a value close to the volumetric capacity lower limit through step S 15 in order to achieve the target temperature, a negative decision is made in step S13 and the operation proceeds to step S 16 so as to adjust the total quantity of air-conditioning heat-transfer medium circulating through the air-conditioning circuit 2000 to the quantity required in the system.

In step S16, the volumetric capacity of the first space 23 in the air-conditioning volume altering tank 8A is increased. It is to be noted that the volumetric capacity is increased in step S16 in correspondence to the temperature control capability of the refrigerating cycle circuit 1000 allocated to the air-conditioning circuit 2000.

As the volumetric capacity of the first space 23 in the air-conditioning volume altering tank 8A increases, the air-conditioning heat-transfer medium in the second space 24 starts to flow into the first space 23 through the communicating hole 26 at the adiabatic partition 25. As the air-conditioning heat-transfer medium, having been stored in the second space 24, releases heat into the surrounding environment or absorbs heat from the surrounding environment, the temperature of the air-conditioning heat-transfer medium in the second space 24 diverges from the temperature of the circulating air-conditioning heat-transfer medium. Namely, the temperature of the air-conditioning heat-transfer medium in the second space will be lower than the temperature of the circulating air-conditioning heat-transfer medium during the air heating operation, whereas it will be higher than the temperature of the circulating air-conditioning heat-transfer medium during the air cooling operation. For this reason, unless a sufficient margin is assured in the allocation of temperature control capability from the refrigerating cycle circuit 1000 to the air-conditioning circuit 2000, the temperature of the air-conditioning heat-transfer medium is bound to fluctuate as the volumetric capacity of the first space 23 increases.

Accordingly, the volumetric capacity of the first space 23 is increased by an extent matching the margin of the temperature control capability assured for the refrigerating cycle circuit 1000. For instance, the temperature of the air-conditioning heat-transfer medium retained in the second space 24 may be detected via a temperature sensor, the extent by which the volumetric capacity should be increased in step S16 may be estimated based upon the difference between the temperature of the air-conditioning heat-transfer medium circulating through the air-conditioning circuit 2000 and the temperature of the air-conditioning heat-transfer medium retained in the second space 24 and the temperature control capability of the refrigerating cycle circuit 2000, and the adiabatic partition 25 may be moved based upon the estimated extent of the volumetric capacity increase.

Through these structural measures, the thermal capacity of the air-conditioning heat-transfer medium circulating through the air-conditioning circuit 2000 is raised and thus, it is ensured that the temperature of the air-conditioning heat-transfer medium does not fluctuate readily. As a result, better passenger comfort is assured through the air-conditioning operation. Once the processing in step S16 ends, the operation returns to step S11.

If, on the other hand, it is decided in step S 13 that the volumetric capacity of the first space 23 in the air-conditioning volume altering tank 8A has reached the target volumetric capacity, the operation proceeds to step S 14. In step S 14, a decision is made based upon vehicle information provided by the higher-order control device 5000 as to whether or not there is any likelihood that the performance levels required of the air-conditioning circuit 2000 and the component cooling circuit 3000 will exceed the maximum temperature control capability of the refrigerating cycle circuit 1000.

The vehicle information used in step S 14 includes vehicle speed information, car navigation information and the like input from the vehicle control device side. For instance, if the vehicle speed is currently increasing, the temperature control target component 16 is expected to generate more heat and thus, the required performance levels for air-conditioning and component cooling are both expected to rise. In addition, if the navigation information indicates that the vehicle is expected to travel up a mountain road, for instance, the required component cooling performance level is expected to rise.

If it appears that the heat generated at the temperature control target component 16 is temporarily on the rise and the temperature control capability required of the refrigerating cycle circuit 1000 in order to continuously cool the temperature control target component 16 and provide air-conditioning inside the cabin is reasonably expected to exceed the maximum temperature control capability of the refrigerating cycle circuit 1000, the operation proceeds from step S 14 to step S 16 in which the volumetric capacity of the first space 23 in the air-conditioning volume altering tank 8A is increased in advance.

Through these measures, the thermal capacity of the air-conditioning heat-transfer medium is increased and the temperature change rate of the air-conditioning heat-transfer medium is slowed down. Since the temperature of the air-conditioning heat-transfer medium changes more slowly, the temperature of the air output for purposes of air-conditioning can be temporarily sustained at the optimal level even if the flow rate of the refrigerant flowing through the air-conditioning heat exchanger 10A is reduced or the flow of the refrigerant is stopped. As a result, the temperature control capability of the refrigerating cycle circuit 1000 can be temporarily directed to toward cooling of the temperature control target component 16.

If a negative decision is made in step S 14, the operation returns to step S11. By altering the volumetric capacity of the first space 23 in the air-conditioning volume altering tank 8A disposed in the air-conditioning circuit 2000 so as to reduce or increase the thermal capacity of the air-conditioning heat-transfer medium as described above, the heat response speed can be raised and the cabin temperature can be quickly adjusted to the optimal level through air-conditioning and the fluctuation in the temperature of the conditioned air can be minimized, even if the temperature control capability allocated to the air conditioning-side is temporarily reduced. As a result, better passenger comfort is assured through air-conditioning.

### (Control processing for the component cooling volume altering tank 8B)

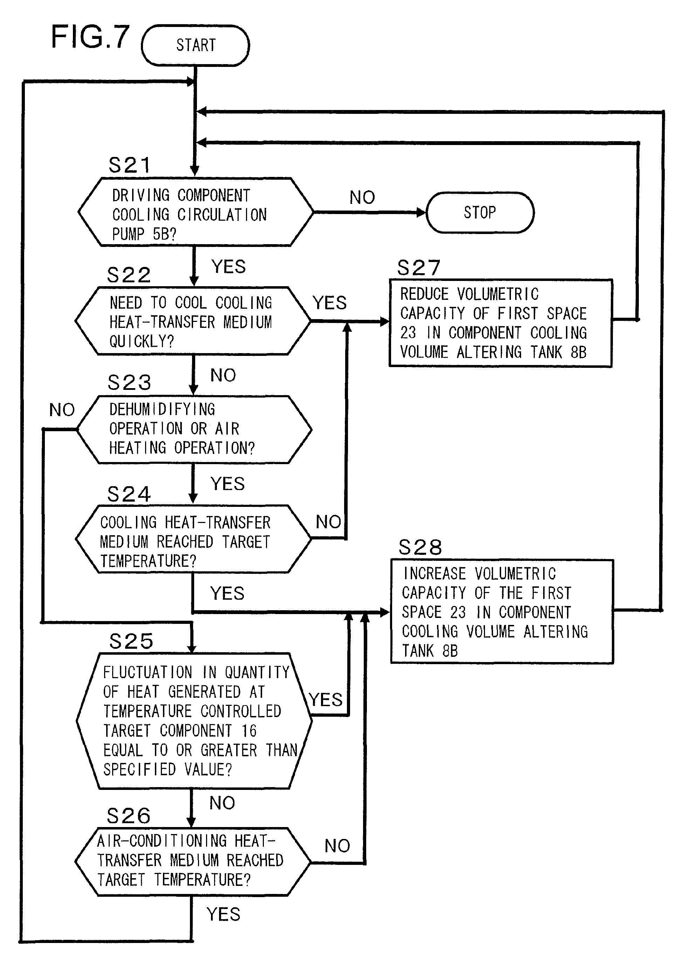

Next, in reference to the flowchart presented in FIG. 7, the control processing executed to control the component cooling volume altering tank 8B is described. The processing executed in step S21 in FIG. 7 is similar to the processing in step S11 executed as described earlier in reference to the flowchart presented in FIG. 6. Namely, in step S21, a decision is made as to whether or not the component cooling circulation pump 5B is currently being driven, and if it is decided that the pump is not being driven, the control processing for the component cooling volume altering tank 8B ends, whereas if it is decided that the pump is being driven, the operation proceeds to step S22.

In step S22, a decision is made as to whether or not the heat generated at the temperature control target component 16 has increased temporarily and the component cooling heat-transfer medium needs to be cooled quickly. Such an increase in the heat generated at the temperature control target component 16 may occur when the exothermic quantity at the motor or the inverter rises due to an increase in load. The temperature of the temperature control target component 16 is detected via the temperature sensor 3001. In step S22, a decision is made as to whether or not the component cooling heat-transfer medium needs to be cooled quickly based upon the temperature detected by the temperature sensor 3001.

It is to be noted that while the decision as to whether or not the component cooling heat-transfer medium needs to be cooled quickly is made based upon the temperature detected via the temperature sensor 3001 in this example, a decision as to whether or not the component cooling heat-transfer medium needs to be cooled quickly may be made through estimation based upon the vehicle information provided by the higher-order control device 5000, as in the decision-making processing executed in step S 14 in FIG. 6. If it is decided that quick cooling is likely to be necessary, the processing in step S27 is executed so as to lower the temperature of the component cooling heat-transfer medium in advance, in preparation for the expected increase in the temperature of the temperature control target component 16.

If it is decided in step S22 that the component cooling heat-transfer medium needs to be cooled quickly, the operation proceeds to step S27 to decrease the volumetric capacity of the first space 23 in the component cooling volume altering tank 8B. As a result, the thermal capacity of the component cooling heat-transfer medium circulating through the component cooling circuit 300 is reduced, thereby making it possible to lower the temperature of the component cooling heat-transfer medium to the target temperature without delay. As described above, whenever the heat generated at the temperature control target component 16 increases temporarily, effective measures are taken through the processing executed in step S22 and step S27, i.e., by reducing the volumetric capacity of the first space 23 in the component cooling volume altering tank 8B. If, on the other hand, it is decided in step S22 that the component cooling heat-transfer medium does not need to be cooled quickly, the operation proceeds to step S23.

Unlike the air-conditioning volume altering tank 8A in the air-conditioning circuit 2000 described earlier, the component cooling volume altering tank 8B must be controlled differently depending upon the operating state of the component cooling/air-conditioning system. Namely, when the component cooling/air-conditioning system is engaged in a dehumidifying and air heating operation, the exhaust heat from the temperature control target component 16 is utilized for air heating and, for this reason, a target temperature that will allow the component cooling heat-transfer medium to be used in the air heating operation is set for the component cooling heat-transfer medium. For instance, when the component cooling/air-conditioning system is engaged in an air heating operation, air, having been warmed at the air conditioning-side cabin heat exchanger 15A is further heated at the component cooling-side cabin heat exchanger 15B. Therefore, the temperature of the component cooling heat-transfer medium must be higher than the temperature of the air-conditioning heat-transfer medium. To be more exact, the temperature of the component cooling heat-transfer medium must be higher than the temperature of the air flowing into the component cooling-side cabin heat exchanger 15B. It is to be noted that a temperature at which no malfunction would be expected to occur at the temperature control target component 16 should be selected as the target temperature. A target temperature that does not adversely affect the temperature control target component may be, for instance, approximately 40°C.

However, when the component cooling/air-conditioning system is engaged in an air cooling operation or a component cooling/air heating operation, the exhaust heat is not utilized in the manner described above. For this reason, if it is decided in step S23 that the component cooling/air-conditioning system is currently engaged in a dehumidifying operation or an air heating operation, the operation proceeds to step S24, whereas if it is decided in step S23 that the component cooling/air-conditioning system is engaged in an air cooling operation or a component cooling/air heating operation, the operation proceeds to step S25.

If the temperature of the component cooling heat-transfer medium is lower than the temperature of the air-conditioning heat-transfer medium during a dehumidifying operation, at the start of the air heating operation or the like, it is desirable to raise the temperature of the component cooling heat-transfer medium to the target temperature described above as quickly as possible so as to ensure that the desired effect is achieved through the dehumidifying operation or the air heating operation. Accordingly, upon proceeding to step S24, the detected temperature of the component cooling heat-transfer medium is compared with the target temperature. If it is decided in step S24 that the temperature of the component cooling heat-transfer medium is lower than the target temperature, the operation proceeds to step S27 to reduce the volumetric capacity of the first space 23 in the component cooling volume altering tank 8B. Through these measures, the thermal capacity of the component cooling heat-transfer medium circulating through the component cooling circuit 3000 is reduced and the temperature of the component cooling heat-transfer medium can thus be quickly raised to the target temperature.

If it is decided in step S24 that the temperature of the component cooling heat-transfer medium has reached the target temperature, the operation proceeds to step S28 to increase the volumetric capacity of the first space 23 in the component cooling volume altering tank 8B in correspondence to the amount of heat generated at the temperature control target component 16. Through the processing executed in step S28, which is similar to that executed in step S 16 in FIG. 6, the thermal capacity of the component cooling heat-transfer medium circulating through the component cooling circuit 3000 is increased and the temperature change rate of the component cooling heat-transfer medium is lowered. As a result, the extent to which the temperature of the air output for purposes of air-conditioning fluctuates is reduced and better passenger comfort can be assured through air-conditioning.

If, on the other hand, the component cooling/air-conditioning system is currently engaged in an air cooling operation or a component cooling/air heating operation and the operation has proceeded from step S23 to step S25, a decision is made in step S25 as to whether or not the extent of the fluctuation of the heat generated at the temperature control target component 16 is equal to or greater than a specified value. This decision is made based upon motor operation information transmitted from the vehicle side, i.e., based upon the required motor torque.

While the vehicle is traveling on a mountain road or the like, the motor operation conditions may change frequently, resulting in marked fluctuation in the quantity of heat generated at the temperature control target component 16. In such a situation, the temperature of the component cooling heat-transfer medium changes significantly and the extent to which the component cooling-side flow rate control valve 2B is opened/closed and the rotation rate of the compressor 1 change frequently as a result. This state, which is likely to lead to an increase in energy consumption at the compressor 1 and reduced service life of the compressor 1 and the component cooling-side flow rate control valve 2B, should be avoided.

Accordingly, if it is decided in step S25, based upon the required motor torque information, that the extent to which the heat generated at the temperature control target component 16 fluctuates is likely to be equal to or greater than the specified value, the operation proceeds to step S28, to increase the volumetric capacity of the first space 23 in the component cooling volume altering tank 8B. The specified value, in reference to which the decision is made in step S25, is a preselected value representing an extent of fluctuation in heat generation likely to lead to an increase in energy consumption at the compressor 1 or reduced service life of the compressor 1 and the component cooling-side flow rate control valve 2B. Through the measures taken as described above, the temperature change rate of the component cooling heat-transfer medium can be kept down even when the thermal capacity of the component cooling heat-transfer medium circulating through the component cooling circuit 3000 rises and the quantity of heat generated at the temperature control target component 16 fluctuates drastically.

It is to be noted that the motor information based upon which the decision is made in step S25 may indicate the motor temperature instead of the required motor torque, or the decision may be made in step S25 based upon temperature information indicating the temperature of the component cooling heat-transfer medium. However, the appropriate counteraction can be taken sooner by using motor information indicating the required motor torque rather than the motor temperature. In other words, when the decision is made in step S25 based upon motor information indicating the motor temperature, the counteraction can only be taken upon detecting that the motor temperature has already risen. It will be obvious that an increase in the motor temperature may be predicted with better accuracy by using both the motor temperature information and the required motor torque information.

Upon ending the processing in step S28, the operation returns to step S21. If, on the other hand, it is decided in step S25 that the extent of fluctuation in the quantity of heat generated at the temperature control target component 16 is equal to or less than the specified value, the operation proceeds to step S26.

It is desirable to allocate significant temperature control capability of the refrigerating cycle circuit 1000 to the air conditioning-side so as to achieve the target temperature as soon as possible when the air-conditioning heat-transfer medium is yet to reach the target temperature at a start of the air cooling operation or the component cooling/air heating operation. The temperature of the component cooling heat-transfer medium needs to be equal to or less than a specified value determined based upon the allowable temperature limit that the cooling target component 16 can tolerate in order to allow such allocation of the temperature control capability. Furthermore, the thermal capacity of the component cooling heat-transfer medium must be raised so as to ensure that even if the temperature control capability allocated to the cooling side is reduced, the temperature of the component cooling heat-transfer medium does not increase by an excessive extent.

Accordingly, a decision is made in step S26 as to whether or not the temperature of the air-conditioning heat-transfer medium has reached the target temperature, and if it is decided that the air-conditioning heat-transfer medium is yet to achieve the target temperature, the operation proceeds to step S28 to increase the volumetric capacity of the first space 23 in the component cooling volume altering tank 8B. Through this control, the thermal capacity of the component cooling heat-transfer medium circulating through the component cooling circuit 3000 is increased and thus, even if the flow rate of the refrigerant traveling to the component cooling heat exchanger 10B is reduced or the refrigerant flow is stopped altogether in order to allocate more temperature control capability to the air-conditioning side, an increase in the temperature of the component cooling heat-transfer medium can be suppressed or delayed. Consequently, the temperature control capability of the refrigerating cycle circuit 1000 can be temporarily allocated to the air conditioning-side and thus, the air-conditioning heat-transfer medium is able to achieve the target temperature without delay.

Upon ending the processing in step S26, the operation returns to step S21. In the embodiment assuming a structure that includes the volume altering tanks 8A and 8B described above, the temperature response speed can be raised by decreasing the volume of the heat-transfer medium or the temperature response speed can be slowed down by increasing the volume of the heat-transfer medium so as to assure better temperature stability. In other words, the temperature response speed of the heat-transfer medium can be adjusted in correspondence to the current conditions.

― Second Embodiment ―

The second embodiment, to be described below, is achieved by modifying the structure of the component cooling volume altering tank 8B in the first embodiment. It is to be noted that the same reference numerals are assigned to elements similar to those shown in FIGS. 1 through 5 and that the following description will focus on the features differentiating the second embodiment from the previous embodiment.

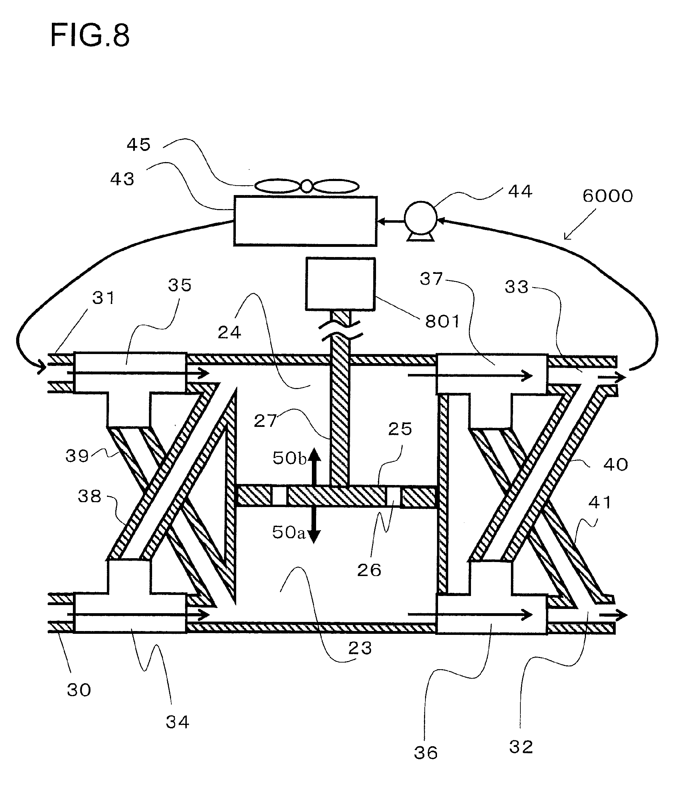

FIG. 8 schematically illustrates the structure of the component cooling volume altering tank 8B achieved in the second embodiment. The space inside the component cooling volume altering tank 8B is partitioned by an adiabatic partition 25 into a first space 23 and a second space 24. Communicating holes 26 are formed in the adiabatic partition 25, which can be driven up/down in the figure via a drive shaft 27. The component cooling volume altering tank 8B in the second embodiment includes two inflow ports (a first inflow port 30 and a second inflow port 31) through which the component cooling heat-transfer medium flows in and two output ports (a first outlet port 32 and a second outlet port 33) through which the component cooling heat-transfer medium flows out.

The first inflow port 30 is connected via a first intake three-way valve 34 to the intake side of the first space 23 and the second space 24. Namely, the first inflow port 30 can be selectively connected to either the first space 23 or the second space 24 by switching the first intake three-way valve 34. The second inflow port 31 is connected via a second intake three-way valve 35 to the intake side of the first space 23 and the second space 24. Namely, the second inflow port 31 can be selectively connected to either the first space 23 or the second space 24 by switching the second intake three-way valve 34.

A first outlet three-way valve 36 is disposed on the outlet side of the first space 23. The first space 23 can be selectively connected to either the first outflow port 32 or the second outflow port 33 by switching the first outlet three-way valve 36. It is to be noted that a first outlet cross passage 40 extends between the first outlet three-way valve 36 and the second outflow port 33. In addition, a second outlet three-way valve 37 is disposed on the outlet side of the second space 24. The second space 24 can be selectively connected to either the first outflow port 32 or the second outflow port 33 by switching the second outlet three-way valve 37. It is to be noted that a second outlet cross passage 41 extends between the second outlet three-way valve 37 and the first outflow port 32.

The volumetric capacity ratio of the first space 23 and the second space 24 in the component cooling volume altering tank 8B in this embodiment, too, can be altered by driving the adiabatic partition 25 along the direction indicated by the arrow 50a or the arrow 50b. Namely, as the adiabatic partition 25 is driven along the direction indicated by the arrow 50a, the volumetric capacity of the first space 23 decreases and the volumetric capacity of the second space 24 increases. If, on the other hand, the adiabatic partition 25 is driven along the direction indicated by the arrow 50b, the volumetric capacity of the first space 23 increases and the volumetric capacity of the second space 24 decreases.

The first inflow port 30 and the first outflow port 32 are connected to the component cooling circuit 3000. Thus, the component cooling heat-transfer medium having traveled through the primary circuit 19 or the bypass circuit 31 flows into the component cooling volume altering tank 8B through the first inflow port 30, whereas the component cooling heat-transfer medium having flowed out through the first outflow port 32 of the component cooling volume altering tank 8B then flows into the temperature control target component 16.

The second inflow port 31 and the second outflow port 33, on the other hand, are connected to a radiating circuit 6000 disposed as a circuit independent of the component cooling circuit 3000. The radiating circuit 6000 includes a radiating heat exchanger 43, a circulation pump 44 and a radiating fan 45 disposed at the radiating heat exchanger 43. As the circulation pump 44 is driven, the component cooling heat-transfer medium, having flowed out through the second outflow port 33 of the component cooling volume altering tank 8B, travels through the circulation pump 44 and the radiating heat exchanger 43 before flowing into the second inflow port 31 at the component cooling volume altering tank 8B. As the radiating fan 45 is driven, the component cooling heat-transfer medium inside the radiating heat exchanger 43 exchanges heat with the outside air, and if the temperature of the component cooling heat-transfer medium inside the radiating heat exchanger 43 is equal to or lower than the outside air temperature, cooling is achieved.

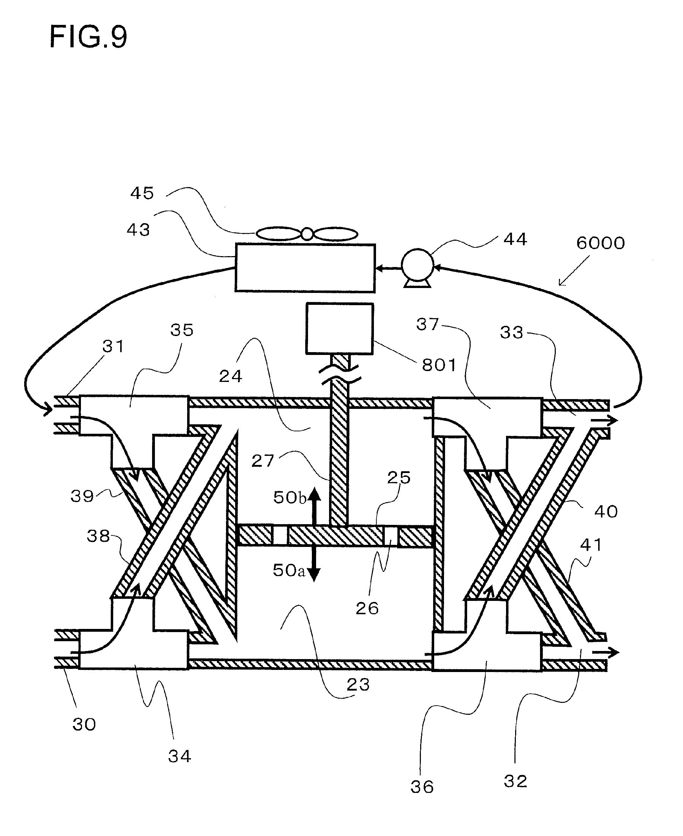

The component cooling volume altering tank 8B in the embodiment assumes one of two modes, a standard mode or a reverse mode (flow path modes) with respect to the flow of cooling heat-transfer medium inside the component cooling volume altering tank 8B. The component cooling volume altering tank 8B in the standard mode is shown in FIG. 8, whereas the component cooling volume altering tank 8B assuming the reverse mode as shown in FIG. 9.

### (Standard mode)

The standard mode is first described in reference to FIG. 8. In the standard mode, the first inflow port 30 and the first space 23 are connected with each other via the first intake three-way valve 34, the first space 23 and the first outflow port 32 are connected with each other via the first outlet three-way valve 36, the second inflow port 31 and the second space 24 are connected with each other via the second intake three-way valve 35 and the second space 24 and the second outflow port 33 are connected with each other via the second outlet three-way valve 37. Thus, the component cooling heat-transfer medium having flowed in through the first inflow port 30 travels through the first intake three-way valve 34, the first space 23 and the first outlet three-way valve 36 in this order before flowing out through the first outflow port 32. In addition, the component cooling heat-transfer medium having flowed in through the second inflow port 31 travels through the second intake three-way valve 35, the second space 24 and the second outlet three-way valve 37 in this order before flowing out through the second outflow port 33.

### (Reverse mode)

In the reverse mode shown in FIG. 9, the first inflow port 30 and the second space 24 are connected with each other via the first intake three-way valve 34, the second space 24 and the first outflow port 32 are connected with each other via the second outlet three-way valve 37, the second inflow port 31 and the first space 23 are connected with each other via the second intake three-way valve 35 and the first space 23 and the second outflow port 33 are connected with each other via the first outlet three-way valve 36. Thus, the component cooling heat-transfer medium having flowed in through the first inflow port 30 travels through the first intake three-way valve 34, the first intake cross passage 38, the second space 24, the second outlet three-way valve 37 and the second outlet cross passage 41 in this order before flowing out through the first outflow port 32. In addition, the component cooling heat-transfer medium having flowed in through the second inflow port 31 travels through the second intake three-way valve 35, the second intake cross passage 39, the first space 23, the first outlet three-way valve 36 and the first outlet cross passage 40 in this order before flowing out through the second outflow port 33.

In addition to adjusting the volume of the component cooling heat-transfer medium circulating through the component cooling circuit 3000 by altering the volumetric capacity ratio of the first space 23 and the second space 24 through displacement of the adiabatic partition 25, as in the component cooling volume altering tank 8B achieved in the first embodiment, the component cooling volume altering tank 8B in the embodiment can be used by switching to either the standard mode shown in FIG. 8 or the reverse mode shown in FIG. 9, as explained below.

For instance, as the component cooling volume altering tank 8B currently assuming the standard mode in which the first space 23 is connected to the component cooling circuit 3000, is switched to the reverse mode, the first space 23 becomes disconnected from the component cooling circuit 3000 and instead the second space 24 becomes connected to the component cooling circuit 3000.

Namely, with regard to the component cooling heat-transfer medium included in the component cooling circuit 3000, the component cooling heat-transfer medium in the first space 23 is instantly replaced by the component cooling heat-transfer medium in the second space 24, which is part of the radiating circuit 6000. Likewise, as the component cooling volume altering tank is switched from the reverse mode to the standard mode, the component cooling heat-transfer medium in the second space 24 is instantly replaced by the component cooling heat-transfer medium in the first space 23, which constitutes part of the radiating circuit 6000.

As explained earlier, as the circulation pump 44 and the radiating fan 45 in the radiating circuit 6000 are driven, the temperature of the component cooling heat-transfer medium present within the first space 23 at the component cooling volume altering tank 8B can be held at the level matching the outside temperature in the standard mode, whereas the temperature of the component cooling heat-transfer medium present within the second space 24 can be held at a level matching the outside air temperature in the reverse mode. For instance, as the component cooling volume altering tank in the standard mode is switched to the reverse mode when the temperature of the component cooling heat-transfer medium in the first space 23 is different from the temperature of the component cooling heat-transfer medium in the second space 24, the temperature of the component cooling heat-transfer medium flowing out through the first outflow port 32 to flow to the temperature control target component 16 can be instantly switched from that of the component cooling heat-transfer medium in the first space 23 to that of the component cooling heat-transfer medium in the second space 24.

In more specific terms, the quantity of heat generated at the temperature control target component 16 may be expected to rise during the air cooling operation or the component cooling/air heating operation. In anticipation of such an increase in heat generation, the circulation pump 44 and the radiating fan 45 are driven in advance so as to lower the temperature of the component cooling heat-transfer medium in the second space 24 constituting part of the radiating circuit 6000 to the level of the outside air temperature. It is to be noted that while the following description focuses on an example in which the component cooling volume altering tank is switched from the standard mode to the reverse mode, the same principle applies to the operation executed as the component cooling volume altering tank is switched from the reverse mode to the standard mode.

As the heat generated at the temperature control target component 16 temporarily increases and the need to quickly lower the temperature of the component cooling heat-transfer medium arises, the thermal capacity of the component cooling heat-transfer medium circulating through the component cooling circuit 3000 is reduced by altering the volumetric capacity ratio of the first space 23 and the second space 24. If the temperature of the component cooling heat-transfer medium still cannot be lowered quickly enough, the component cooling volume altering tank is switched from the standard mode to the reverse mode so as to lower the temperature of the component cooling heat-transfer medium flowing into the temperature control target component 16 instantly to the level of the outside air temperature. However, it will be obvious that the component cooling volume altering tank may be switched from the standard mode to the reverse mode at startup.

It is to be noted that the flow path mode switchover described above may be executed once or it may be repeatedly executed several times until the increasing trend in the quantity of heat generated at the temperature control target component 16 stops.

A dehumidifying operation or an air heating operation, on the other hand, is executed by utilizing the exhaust heat from the temperature control target component 16, and thus, whenever there is a temporary increase in the quantity of heat generated at the temperature control target component 16 during the dehumidifying operation or the air heating operation, the component cooling heat-transfer medium should be cooled quickly by switching from the standard mode to the reverse mode. Once any excessive rise in the temperature at the temperature control target component 16 is thus prevented, the temperature of the component cooling heat-transfer medium needs to be adjusted to a level that allows the use of exhaust heat. Accordingly, the flow path mode inside the component cooling volume altering tank 8B is first switched in order to quickly bring down the temperature of the component cooling heat-transfer medium at the component cooling circuit 3000, as in the air cooling operation or the component cooling/air heating operation. However, following the switchover, the circulation pump 44 and the radiating fan 45 are turned off so as to ensure that the temperature of the component cooling heat-transfer medium within the first space 23 or the second space 24 connected to the radiating circuit 6000 is not lowered to the level of the outside air.

Once the temporary increase in the quantity of heat generated at the temperature control target component 16 stops, the flow path mode is switched again, i.e., switched from the reverse mode to the standard mode, so that the component cooling heat-transfer medium in the first space 23, currently connected to the radiating circuit 6000, is reinstated in the component cooling circuit 3000. As explained earlier, the circulation pump 44 and the radiating fan 45 are in the OFF state while the first space 23 is connected to the radiating circuit 6000. This means that the temperature of the component cooling heat-transfer medium in the first space 23, which is now reinstated in the component cooling circuit 3000, has not changed significantly in relation the temperature at the time of the switchover from the standard mode to the reverse mode. For this reason, after the component cooling heat-transfer medium in the first space 23 is reinstated into the component cooling circuit 3000, the extent to which the temperature of the component cooling heat-transfer medium in the component cooling circuit 3000 decreases is kept down, enabling quick resumption of the dehumidifying operation or the air heating operation.

The structure adopted in the component cooling volume altering tank 8B in the embodiment described above allows it to function even more effectively when the quantity of heat generated at the temperature control target component 16 spikes temporarily.

― Third Embodiment ―

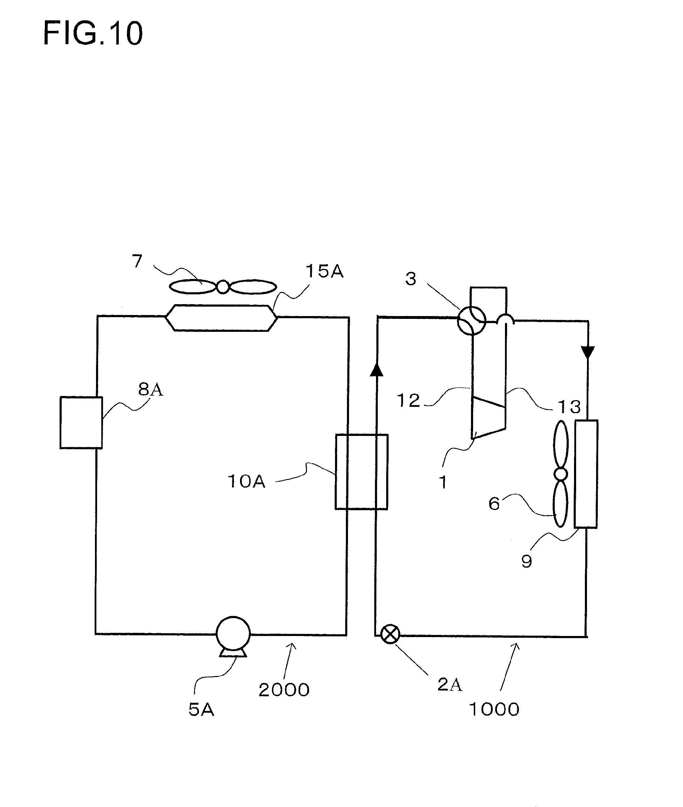

FIG. 10 shows the third embodiment of the present invention achieved by adopting the present invention in an air-conditioning system. The air-conditioning system shown in FIG. 10 assumes a structure similar to that of the system shown in FIG. 1 pertaining to its air-conditioning cycle and refrigerating cycle. In other words, the structure shown in FIG. 10 is identical to that of the component cooling/air-conditioning system shown in FIG. 1, minus the component cooling circuit 3000, the component cooling heat exchanger 10B, the flow rate control valves 2B and 2C, the receiver 11 and the piping connecting the receiver 11 to the intake piping 12 at the compressor 1. Namely, the air-conditioning system retains the air-conditioning functions of the component cooling/air-conditioning system in the first embodiment but does not have a function of cooling the temperature control target component 16. The air-conditioning volume altering tank 8A may adopt a structure such as that shown in FIG. 2 or FIG. 8. It is to be noted that the same reference numerals are assigned to elements similar to those shown in FIGS. 1 through 5 and the following description focuses on the features differentiating the third embodiment from the previous embodiment.

The air-conditioning system in the embodiment may operate in an air cooling mode or an air heating mode. The air cooling mode assumed in the air-conditioning system in the embodiment is equivalent to the air cooling mode of the component cooling/air-conditioning system in the first embodiment minus the function of cooling the temperature control target component 16, whereas the air heating mode in the air-conditioning system in the current embodiment is equivalent to the air heating/radiating operation mode assumed in the component cooling/air-conditioning system in the first embodiment, minus the utilization of the exhaust heat from the temperature control target component 16. The flow rate of the refrigerant circulating through the refrigerating cycle circuit 1000 is adjusted by opening or closing the air conditioning-side flow rate control valve 2A.

The temperature of the air output for purposes of air-conditioning cannot be adjusted to the optimal level at, for instance, the start of air-conditioning operation unless the temperature of the air-conditioning heat-transfer medium has already reached the target temperature. In order to achieve the target temperature, the volumetric capacity of the first space 23 in the air-conditioning volume altering tank 8A is reduced. Through these measures, the thermal capacity of the air-conditioning heat-transfer medium circulating through the air-conditioning circuit is lowered and the air-conditioning heat-transfer medium is thus allowed to quickly achieve the target temperature.

Once the temperature of the air-conditioning heat-transfer medium reaches the target temperature, the volumetric capacity of the first space 23 in the air-conditioning volume altering tank 8A is increased in correspondence to the temperature control capability of the refrigerating cycle circuit 1000. As a result, the thermal capacity of the air-conditioning heat-transfer medium circulating through the air-conditioning circuit 2000 is raised and the extent of fluctuation in the temperature of the air-conditioning heat-transfer medium is reduced. Through these measures, better passenger comfort can be assured through air-conditioning.

― Fourth Embodiment ―

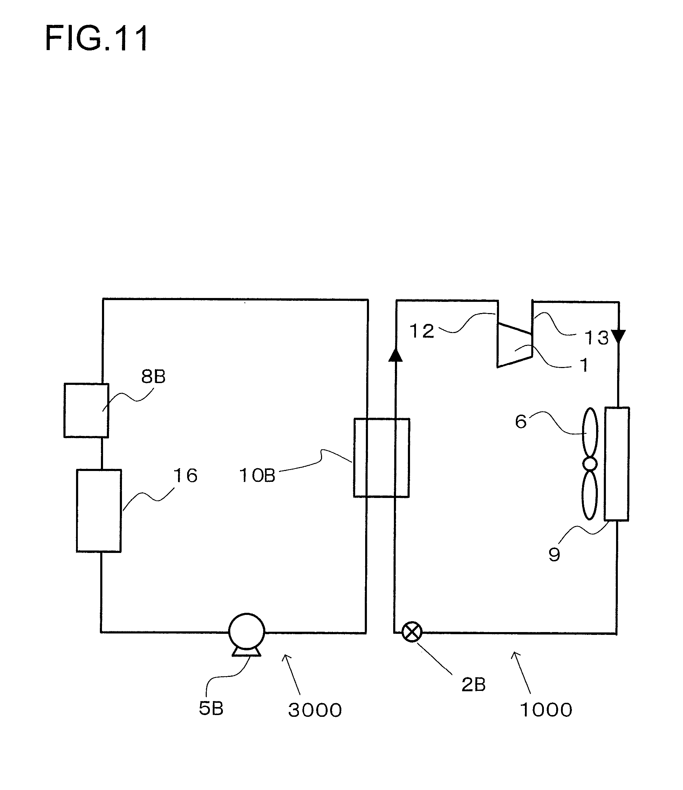

FIG. 11 shows the fourth embodiment of the present invention achieved by adopting the present invention in a refrigerating cycle cooling system. The refrigerating cycle cooling system shown in FIG. 11 is similar to the component cooling/air-conditioning system achieved in the first embodiment, as shown in FIG. 1 minus the air-conditioning circuit, the air-conditioning heat exchanger 10A, the component cooling-side cabin heat exchanger 15B, the bypass circuit 20, the three-way valve 4, the four-way valve 3, the flow rate control valves 2A and 2C, the receiver 11 and the piping that connects the receiver 11 to the four-way valve 3. Namely, the refrigerating cycle cooling system achieved in the embodiment retains the function of cooling the temperature control target component 16 alone and does not have the function of the component cooling/air-conditioning system in the first embodiment for conditioning the air in the cabin. The component cooling volume altering tank 8B may adopt a structure such as that shown in FIG. 2 or FIG. 8. It is to be noted that the same reference numerals are assigned to elements similar to those shown in FIGS. 1 through 5 and the following description focuses on the features differentiating the fourth embodiment from the previous embodiment.

If the quantity of heat generated at the temperature control target component 16 increases temporarily and the component cooling heat-transfer medium thus needs to be cooled quickly, the volumetric capacity of the first space 23 in the component cooling volume altering tank 8B is reduced. Through these measures, the thermal capacity of the component cooling heat-transfer medium circulating through the component cooling circuit is lowered and the component cooling heat-transfer medium is thus allowed to quickly achieve the target temperature. It is to be noted that the flow rate of the refrigerant circulating through the refrigerating cycle circuit 1000 is adjusted by opening/closing the flow rate control valve 2B.

The heat generated at the temperature control target component 16 in a vehicle traveling on a mountain road or the like tends to fluctuate significantly. In such a situation, the temperature of the component cooling heat-transfer medium changes significantly and the extent to which the component cooling-side flow rate control valve 2B is opened/closed and the rotation rate of the compressor 1 change frequently as a result. This state, which is likely to lead to an increase in energy consumption at the compressor 1 and reduced service life of the compressor 1 and the component cooling-side flow rate control valve 2B, should be avoided. Accordingly, the volumetric capacity of the first space in the component cooling volume altering tank 8B is increased. Through these measures, the thermal capacity of the component cooling heat-transfer medium circulating through the component cooling circuit is raised so as to keep down the temperature change rate of the component cooling heat-transfer medium.

― Fifth Embodiment ―

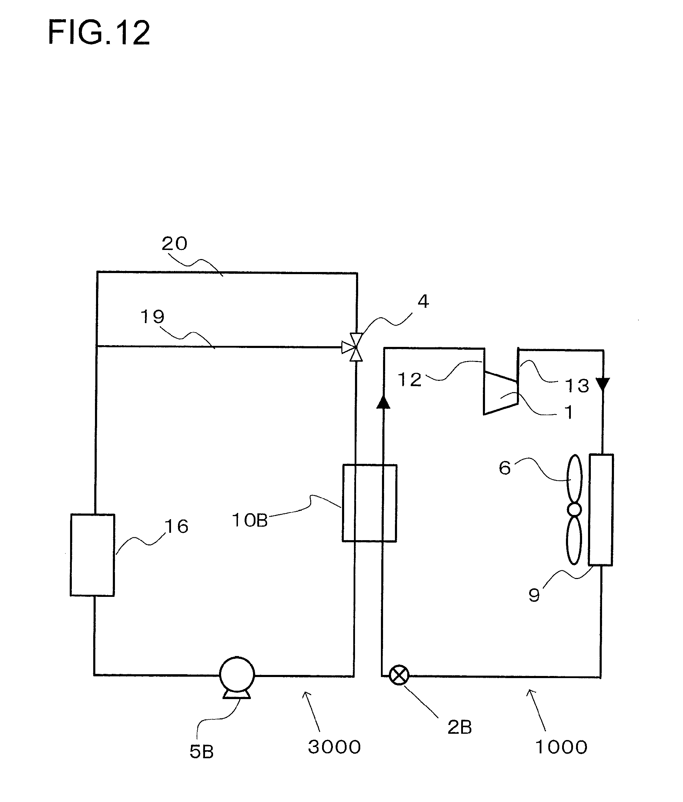

FIG. 12 shows the fifth embodiment of the present invention achieved by adopting the invention in a refrigerating cycle component cooling system. The refrigerating cycle cooling system shown in FIG. 12 is achieved by removing the component cooling volume altering tank 8B from the refrigerating cycle cooling system in the fourth embodiment shown in FIG. 11 and installing the primary circuit 19, the bypass circuit 20 and the three-way valve 4, included in the component cooling/air-conditioning system in the first embodiment shown in FIG. 1, in the refrigerating cycle cooling system in the fourth embodiment. It is to be noted that the same reference numerals are assigned to elements similar to those shown in FIGS. 1 through 5 and FIG. 11 and the following description focuses on the features differentiating the fifth embodiment from the previous embodiments.

The bypass circuit 20 in the fifth embodiment assumes a greater volumetric capacity than the primary circuit 19. In addition, the volume of the component cooling heat-transfer medium circulating through the component cooling circuit 3000 is adjusted by forming the component cooling heat-transfer medium circulating path with the primary circuit 19 or with the bypass circuit 20. The three-way valve 4 is switched so as to allow the component cooling heat-transfer medium to travel through the bypass circuit 20 whenever the volume of the component cooling heat-transfer medium circulating through the component cooling circuit 3000 needs to be increased. In contrast, whenever the volume of the component cooling heat-transfer medium circulating through the component cooling circuit 3000 needs to be reduced, the three-way valve 4 is switched so that the component cooling heat-transfer medium passes through the primary circuit 19.

As described above, the structure achieved in the embodiment includes two medium paths (one constituted with the primary circuit 19 and the other constituted with the bypass circuit 20) assuming different volumetric capacities, and assures optimal temperature response characteristics as required by the circumstances. Namely, the three-way valve 4 is switched to select the primary circuit 19 with a smaller volumetric capacity whenever a quick temperature response is required, whereas the three-way valve 4 is switched to select the bypass circuit 20 with a greater volumetric capacity whenever a more moderate temperature response is desired. It is to be noted that while the structure achieved in the embodiment shown in FIG. 12 provides two medium paths with different volumetric capacities, three or more medium paths with varying volumetric capacities may be formed so as to allow the temperature response speed to be adjusted in finer increments.

― Sixth Embodiment ―

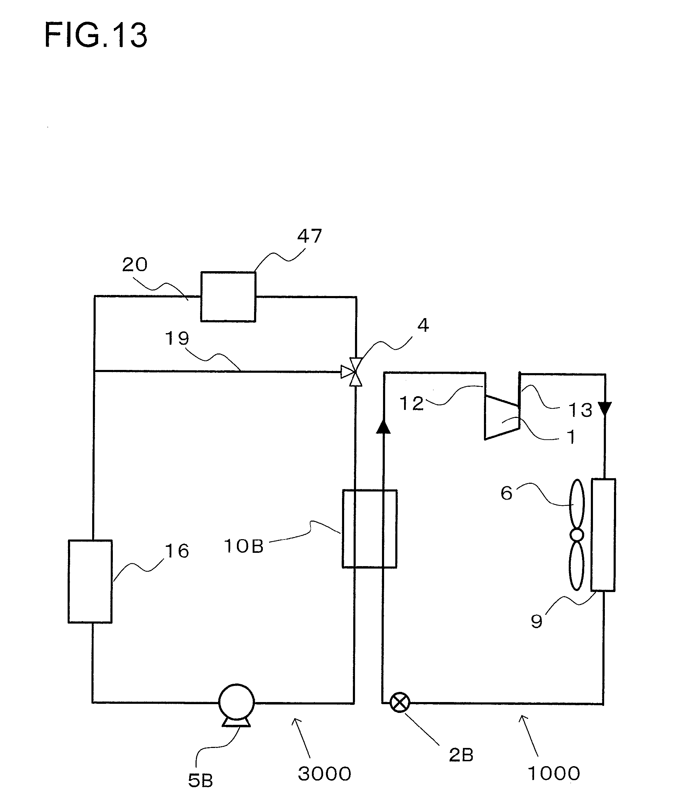

FIG. 13 shows the sixth embodiment of the present invention achieved by adopting the invention in a refrigerating cycle cooling system. The refrigerating cycle cooling system shown in FIG. 13 is achieved by disposing a volume tank 47, where the component cooling heat-transfer medium is stored, at the bypass circuit 20 included in the structure achieved in the fifth embodiment, as shown in FIG. 12, so as to allow the bypass circuit 20 to assume a greater volumetric capacity via the volume tank 47 over the volumetric capacity of the primary circuit 19. It is to be noted that the same reference numerals are assigned to elements similar to those shown in FIG. 12 and the following description focuses on the features differentiating the sixth embodiment from the previous embodiment.

In the embodiment, the volume of the component cooling heat-transfer medium circulating through the component cooling circuit 3000 is adjusted by forming the component cooling heat-transfer medium circulating path with the primary circuit 19 or with the bypass circuit 20. The three-way valve 4 is switched so as to allow the component cooling heat-transfer medium to travel through the bypass circuit 20 whenever the volume of the component cooling heat-transfer medium circulating through the component cooling circuit 3000 needs to be increased. In contrast, whenever the volume of the component cooling heat-transfer medium circulating through the component cooling circuit 3000 needs to be reduced, the three-way valve 4 is switched so that the component cooling heat-transfer medium passes through the primary circuit 19.

The heat cycle systems achieved in the embodiments described above include a refrigerating cycle system 1000, through which a refrigerant is circulated, medium circulation circuits (the air-conditioning circuit 2000 and the component cooling circuit 3000) that include circulation pumps 5A and 5B, via which a heat-transfer medium is circulated, and adjust the temperatures of the temperature control target component 16 and the air inside the cabin with the heat-transfer medium, heat exchangers 10A and 10B via which heat is exchanged between the refrigerant in the refrigerating cycle system 1000 and the heat-transfer medium in the medium circulation circuit, and the volume altering tanks 8A and 8B functioning as volume altering means for altering the volumes of the heat-transfer medium circulating through the circulation circuits.

Via the volume altering tank 8A or 8B installed as described above, the volume of the heat-transfer medium can be reduced so as to raise the temperature response speed or the volume of the heat-transfer medium can be increased so as to improve the temperature stability. Namely, the temperature response speed of the heat-transfer medium can be altered so as to satisfy the need arising in any given state.

The embodiments described above may be adopted singularly or in combination to realize a singular advantage or combination of advantages. In addition, as long as the features characterizing the present invention are not compromised, the present invention is not limited to any of the specific structural particulars described herein. For instance, a load such as the radiating circuit 6000 shown in FIG. 8 may be added at the volume altering tank 8 shown in FIG. 2. In addition, the present invention may be adopted in a heat cycle system other than the heat cycle system of a vehicle.

The above described embodiments are examples, and various modifications can be made without departing from the scope of the invention.

## Claims

1. A heat cycle system, comprising:
a refrigerating cycle system (1000) that circulates a refrigerant;
a medium circulation circuit (2000, 3000) that includes a circulation pump (5A, 5B) for circulating a heat-transfer medium, and adjusts a temperature of a temperature control target with the heat-transfer medium;
a heat exchanger (10A, 10B) that executes heat exchange between the refrigerant in the refrigerating cycle system (1000) and the heat-transfer medium in the medium circulation circuit (2000, 3000); and
a volume altering unit that alters a volume of the heat-transfer medium circulating in the medium circulation circuit (2000, 3000).

2. A heat cycle system according to claim 1, wherein:
the volume altering unit comprises:
a container (8) connected to the circulation circuit and filled with the heat-transfer medium;
a movable partitioning wall (25) movably disposed inside the container (8), which separates a space inside the container (8) into a first space (23) connected to the circulation circuit and a second space (24) that is not connected to the circulation circuit; and
a passage (26) through which the heat-transfer medium is allowed to move between the first space (23) and the second space (24) when the movable partitioning wall (25) moves.

3. A heat cycle system according to claim 2, further comprising:
a drive control unit that moves the movable partitioning wall (25) so as to reduce a volumetric capacity of the first space (23) when a temperature response speed of the heat-transfer medium in the circulation circuit needs to be raised and moves the movable partitioning wall (25) so as to increase the volumetric capacity of the first space (23) when the temperature response speed of the heat-transfer medium in the circulation circuit needs to be lowered.

4. A heat cycle system according to claim 3, further comprising:
a temperature sensor (3001) that detects a temperature of the heat-transfer medium, wherein:
the drive control unit moves the movable partitioning wall (25) so as to reduce the volumetric capacity of the first space (23) connected to the circulation circuit if the temperature detected via the temperature sensor (3001) has not reached a predetermined temperature level.

5. A heat cycle system according to claim 4, wherein:
once the temperature detected via the temperature sensor (3001) reaches the predetermined temperature, the drive control unit moves the movable partitioning wall so that the first space connected to the circulation circuit achieves an optimal volumetric capacity.

6. A heat cycle system according to claim 3, wherein:
the drive control unit moves the movable partitioning wall (25) so as to increase the volumetric capacity of the first space (23) connected to the circulation circuit when the temperature of the temperature control target is predicted to fluctuate based upon operating state information pertaining to the temperature control target.

7. A heat cycle system according to claim 1, further comprising:
a container (8) that includes a first space (23) and a second space (24) separated from each other by a movable partitioning wall (25) that is capable of moving;
a passage (26) through which the heat-transfer medium is allowed to move between the first space (23) and the second space (24) when the movable partitioning wall (25) moves;
a radiating circuit (6000) that radiates heat from the heat-transfer medium;
a switching unit that executes a switchover to select a first connection state in which the first space (23) is connected to the circulation circuit and the second space (24) is connected to the radiating circuit (6000) or a second connection state in which the second space (24) is connected to the circulation circuit and the first space (23) is connected to the radiating circuit (6000); and
a drive control unit that moves the movable partitioning wall (25) so as to reduce a volumetric capacity of the first space (23) when a temperature response speed of the heat-transfer medium in the circulation circuit needs to be raised and moves the movable partitioning wall (25) so as to increase the volumetric capacity of the first space (23) when the temperature response speed of the heat-transfer medium in the circulation circuit needs to be lowered.

8. A heat cycle system according to any one of claims 2 through 7, wherein:
the movable partitioning wall (25) is constituted partially or entirely of an adiabatic material.

9. A heat cycle system according to claim 1, wherein:
the volume altering unit comprises;
a plurality of medium paths with varying volumetric capacities; and
a medium paths switching unit that selects one medium path among the plurality of medium paths and connects the selected medium path to the circulation circuit.

10. A heat cycle system according to claim 1, wherein:
the volume altering unit comprises:
a first medium path;
a second medium path in which a medium storage tank is disposed; and
a medium path switching unit that selects either the first medium path or the second medium path and connects the selected medium path to the circulation circuit.
